(19) Europäisches Patentamt
European Patent Office
Office européen des brevets

(11) **EP 3 719 441 A1**

(12) **EUROPEAN PATENT APPLICATION**

(43) Date of publication:
**07.10.2020 Bulletin 2020/41**

(21) Application number: **20164438.2**

(22) Date of filing: **20.03.2020**

(51) Int Cl.:
*G01B 11/00* *(2006.01)*      *G01B 11/24* *(2006.01)*
*G01S 7/499* *(2006.01)*      *G02B 5/30* *(2006.01)*
*G02B 27/28* *(2006.01)*      *G02B 30/25* *(2020.01)*
*G03B 35/26* *(2006.01)*      *H04N 13/204* *(2018.01)*
*H04N 13/254* *(2018.01)*      *B23Q 17/24* *(2006.01)*
*G06T 7/70* *(2017.01)*      *B25J 9/16* *(2006.01)*
*B25J 19/02* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2019 US 201916376521
25.02.2020 US 202016800741**

(71) Applicant: **Faro Technologies, Inc.
Lake Mary, FL 32746-6204 (US)**

(72) Inventor: **WOLKE, Matthias
70825 Korntal-Münchingen (DE)**

(74) Representative: **Harris, Oliver John Richard
Novagraaf UK
Centrum
Norwich Research Park
Colney Lane
Norwich NR4 7UG (GB)**

(54) **THREE-DIMENSIONAL MEASURING SYSTEM**

(57)      A method includes determining an orientation and position of a moving polarization target based at least in part on a first image of the polarization target captured by a polarization camera and on a recorded polarization of the light that formed the first image.

FIG. 1

EP 3 719 441 A1

**Description**

CROSS-REFERENCE TO RELATED APPLICATIONS

This application is a Continuation-In-Part Application of the United States Patent Application Serial No. 16/376521 filed on April 5, 2019, the contents of which are incorporated by reference herein.

FIELD OF THE INVENTION

The subject matter disclosed herein relates to tracking or registration of objects, especially in the collection of three-dimensional (3D) coordinates.

BACKGROUND

A triangulation scanner, also referred to as a 3D imager, uses a triangulation method to measure the 3D coordinates of points on an object. The triangulation scanner usually includes a projector that projects onto a surface of the object either a pattern of light in a line or a pattern of light covering an area. The projector and at least one camera are coupled together in a fixed relationship. For example, the projector and the one or more cameras may be attached to a common frame. The light emitted from the projector is reflected off the object surface and detected by the camera(s). Since the camera(s) and projector are arranged in a fixed relationship, the distance to the object may be determined using trigonometric principles. Compared to coordinate measurement devices that use tactile probes, triangulation systems provide advantages in quickly acquiring coordinate data over a large area. As used herein, the resulting collection of 3D coordinate values or data points of the object being measured by the triangulation scanner is referred to as point cloud data or simply a point cloud.

A challenge often faced is in tracking moving objects is in six degrees-of-freedom (six-DOF), which is to say, in three orientational degrees of freedom (e.g., pitch angle, yaw angle, and roll angle) and in three translational degrees of freedom (e.g., $x$, $y$, $z$). Such tracking of objects in six-DOF may be needed for moving robot arms, moving articulated arm coordinate measuring machines (AACMM), mobile carts or vehicles, objects pushed or pulled by hand, or any other moving structure.

There is a need for an improved method of registration in which good registration is achieved with a single registration target or a small number of registration targets. In addition, there is a need for a simple and relatively accurate way to track moving objects in six-DOF. Accordingly, while existing registration markers and existing methods of registering markers are suitable for their intended purpose, the need for improvement remains. Likewise, while existing ways of determining the six-DOF of moving objects are suitable for their intended purpose, the need for improvement remains.

BRIEF DESCRIPTION

In an embodiment of the present disclosure, a method includes: with a first polarization camera, capturing a first image of a first polarization target and recording polarization of light that formed the first image, the first polarization target placed on a moving object; with a processing system, determining a first orientation and a first position of the first polarization target based at least in part on the captured first image and the recorded polarization of the light that formed the first image; and storing the first orientation and the first position.

In addition to one or more of the features described herein, or as an alternative, further embodiments of the method may include, with the first polarization camera, further capturing a second polarization target in the first image; and with the processing system, determining a second position of the second polarization target based at least in part on the captured first image and the recorded polarization of the light that formed the first image.

In addition to one or more of the features described herein, or as an alternative, further embodiments of the method may include the moving object is a robot end effector coupled to a robot. In addition to one or more of the features described herein, or as an alternative, further embodiments of the method may include moving the first polarization target; with the first polarization camera, capturing a second image of the first polarization target and recording polarization of light that formed the second image; and with the processing system, determining a second orientation and a second position of the first polarization target based at least in part on the captured second image and the recorded polarization of light that formed the second image.

In addition to one or more of the features described herein, or as an alternative, further embodiments of the method may include moving the first polarization target in response to first control signals sent to the robot; with the first polarization camera, capturing a second image of the first polarization target and recording polarization of light that formed the second image; with the processing system, determining a second orientation and a second position of the first polarization target based at least in part on the captured second image and the recorded polarization of the light that formed the second image; and with the processing system, recording first movement of the first polarization target in response to the first control signals, the first movement being from the first position and the first orientation to the second position and the second orientation.

In addition to one or more of the features described herein, or as an alternative, further embodiments of the method may include sending second control signals to the robot, the second control signals based at least in part on a desired third position of the first polarization target and on the recorded first movement of the first polarization target. In addition to one or more of the features described herein, or as an alternative, further embodiments of the method may include further moving the first polarization target in response to a plurality of additional control signals following the first control signals; with the first polarization camera, capturing a plurality of additional images following the second image and recording polarization of light that formed the plurality of additional images; with the processing system, determining an orientation and a position for each of the plurality of additional images; with the processing system, determining a calibration map for the robot end effector, the calibration map indicating a movement of the robot end effector in response to a control signal; and storing the calibration map.

In addition to one or more of the features described herein, or as an alternative, further embodiments of the method may include directing movement of the robot end effector further based at least in part on the calibration map. In addition to one or more of the features described herein, or as an alternative, further embodiments of the method may include monitoring observed movement of the first polarization target and reporting differences between the observed movement and the movement as predicted by the calibration map. In addition to one or more of the features described herein, or as an alternative, further embodiments of the method may include the robot end effector holds a machining tool. In addition to one or more of the features described herein, or as an alternative, further embodiments of the method may include the machining tool is a milling tool used to remove portions of a metal, wood, or plastic material.

In addition to one or more of the features described herein, or as an alternative, further embodiments of the method may include with a second polarization camera, capturing a second image of the first polarization target and recording polarization of light that formed the second image; and with the processing system, determining the first orientation and the first position of the first polarization target further based on the captured second image and the recorded polarization of the light that formed the second image. In addition to one or more of the features described herein, or as an alternative, further embodiments of the method may include with the processing system, determining the first orientation and the first position of the first polarization target further based on a relative transformation between the first polarization camera and the second polarization camera. In addition to one or more of the features described herein, or as an alternative, further embodiments of the method may include the moving object is a cart or vehicle.

In a further embodiment of the present disclosure, a method includes: with the first polarization camera, capturing a first image of a first polarization target and recording polarization of light that formed the first image, the first polarization camera being placed on a moving object; with a processing system, determining a first orientation and a first position of the first polarization camera based at least in part on the captured first image and the recorded polarization of the light that formed the first image; and storing the first orientation and the first position.

In addition to one or more of the features described herein, or as an alternative, further embodiments of the method may include the first polarization target being stationary. In addition to one or more of the features described herein, or as an alternative, further embodiments of the method may include the first polarization target being placed on a moving object and wherein the first orientation and the first position of the of the first polarization target are determined in relation to the moving first polarization camera.

These and other advantages and features will become more apparent from the following description taken in conjunction with the drawings.

BRIEF DESCRIPTION OF THE DRAWINGS

The subject matter, which is regarded as the invention, is particularly pointed out and distinctly claimed in the claims at the end of the specification. The foregoing and other features and advantages of the invention are apparent from the following detailed description taken in conjunction with the accompanying drawings in which:

FIG. 1 is a schematic view of a triangulation scanner having one camera and one projector according to an embodiment;

FIG. 2 is a schematic representation of a triangulation scanner having two cameras and a projector according to an embodiment;

FIG. 3 is an isometric view of an area triangulation scanner according to an embodiment;

FIG. 4 is a perspective view, partly exploded, of a line scanner and a stereo registration camera according to an embodiment;

FIG. 5A is a front view of a triangulation scanner mounted on a robot to measure a car door affixed to a marked fixture according to an embodiment;

FIG. 5B is a front view of a photogrammetry camera moved to a multiplicity of poses to measure three-dimensional coordinates of a car door affixed to a marked fixture, the fixture proximate to scale bars according to an embodiment;

FIGs. 6A, 6B are schematic illustrations of the effect of varying depth in the spacing of markers according to an embodiment;

FIG. 6C, 6D are schematic illustrations of an automobile door being measured using traditional registration methods;

FIGs. 7A, 7B, 7C are schematic representations of camera components, photosensitive array pixels, and polarization-mask elements, respectively, according to an embodiment;

FIG. 8 is a perspective view of a camera that includes a prismatic element that sends different polarizations to separate photosensitive arrays according to an embodiment;

FIGs. 9A, 9B, 9C are schematic representations of a rotating linear polarizer, a rotation element that includes four linear polarizers oriented are different angles, and camera elements, respectively;

FIGs. 10A, 10B, 10C, 10D are schematic representations of different polarization states obtained by an electro-optic assembly according to an embodiment;

FIG. 10E is a schematic representation of camera elements for use with an electro-optic assembly as described in FIGs. 10A, 10B, 10C, 10D according to an embodiment;

FIG. 11A is a perspective view of a camera assembly that includes four individual cameras according to an embodiment;

FIG. 11B is a schematic representation of the direction in which polarizers are oriented in each of the four cameras of FIG. 11A according to an embodiment;

FIG. 11C is a schematic cross-sectional representation of a four-camera assembly according to an embodiment;

FIGS 12A, 12B, 12C, 12D, 12E illustrate the reflection of s- and p-polarization components for light incident at the Brewster angle;

FIGs. 13A and 13B are schematic representation of a linear polarizer passing unpolarized or partially polarized light;

FIG. 14 illustrates the sinusoidal variation in the irradiance of partially polarized light passing through a rotated polarizer;

FIGs. 15A, 15B, 15C, 15D, 15E, 15F are front or perspective views of polarization targets according to an embodiment;

FIGs. 15G, 15H are top views of polarization targets according to an embodiment;

FIGs. 16A, 16B, 16C are isometric views of target normal vectors for the target in different orientations according to an embodiment;

FIGs. 17A, 17B is an illustration showing the use of polarization targets to register 3D coordinates obtained in different scans according to an embodiment;

FIG. 18 is a flow chart that describes a method for registering 3D data points according to an embodiment;

FIG. 19 is an illustration of a system includes a noncontact 3D measuring device, an object, and a fixture that holds the object in accordance with an embodiment;

FIG. 20 is an illustration of four types of moving structures measured by two or more polarization cameras in conjunction with polarization targets according to an embodiment of the present disclosure;

FIG. 21 is an illustration of four types of moving structures measured by a single polarization camera according to an embodiment of the present disclosure;

FIG. 22A is an illustration of two mobile carts, each having both polarization cameras and polarization cameras on board according to an embodiment of the present disclosure;

FIG. 22B is an illustration of a single mobile cart having a polarization camera used in conjunction with a stationary object having polarization targets according to an embodiment of the present disclosure; and

FIG. 23 is an illustration showing a machining robot monitored and controlled by one or more polarization cameras.

The detailed description explains embodiments of the invention, together with advantages and features, by way of example with reference to the drawings.

DETAILED DESCRIPTION

Embodiments of the present disclosure further provide advantages in determining six degrees-of-freedom (six-DOF) of moving structures.

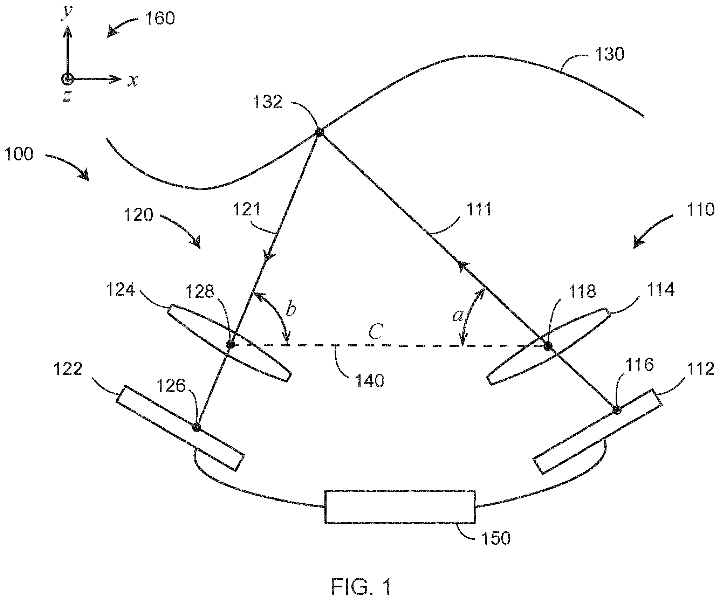

FIG. 1 is a schematic representation of a triangulation scanner 100 having a projector 110, a camera 120, and a processor 150. In an embodiment, the projector 110 includes a projection component 112 and a lens 114. The projection component 112 generates a pattern of light that includes an illuminated point 116 that is projected through a perspective center 118 of the lens 114 in a ray of light 111 that creates a spot of light 132 on an object 130. The camera 120 includes a photosensitive array 122 and a lens 124. A ray of light 121 emerges from the spot of light 132 and passes through a perspective center 128 of the lens 124 before striking the photosensitive array 122 at a point 126. A processor 150 determines the 3D coordinates of the spot of light 132 in a frame of reference 160 of the scanner 100.

In an embodiment, the distance from the camera perspective center 128 to the point or spot of light 132 on the object is found by a triangulation calculation using a triangle formed by the points or spots of light 118, 132, and 128. The distance between the points 118 and 128 is the baseline distance 140, referred to as the baseline distance C. The baseline distance 140 is determined in a compensation procedure carried out for the scanner at an earlier time. The angle $b$ for the point or spot of light 132 relative to the camera 120 is found from the pixel illuminated by the light ray 121. The angle $a$ for the point or spot of light 132 relative to the projector 110 is found from the corresponding illuminated point 116 projected through the ray of light 111. With the angles $a$, $b$ and the distance $C$ known, the processor 150 can use trigonometry to determine every length and every angle of the triangle having points or spots of light 118, 132, 128.

To perform the triangulation calculation, a correspondence between the point 116 and the point 126 may be determined. In other words, a way may be determined that the illuminated point 116, and not an adjacent illuminated point, is the one that illuminated the point 126. There are several ways to determine such a correspondence. In one embodiment a distinctive pattern elements is formed on the projection component 112 that are recognizable on the photosensitive array 122. In another embodiment, a more accurate method involves forming a pattern that varies sinusoidally in irradiance on the surface of the projection component 112. By shifting the sinusoidal pattern laterally at least three times on the projection component, the processor 150 may use mathematics to extract a correspondence among pixels directly. In many cases, points are measured for a plurality of spatial periods of the sinusoidal pattern to determine the correspondence between the points 116 and the point 126. In other embodiments, other methods are used to determine a correspondence among projected and imaged points.

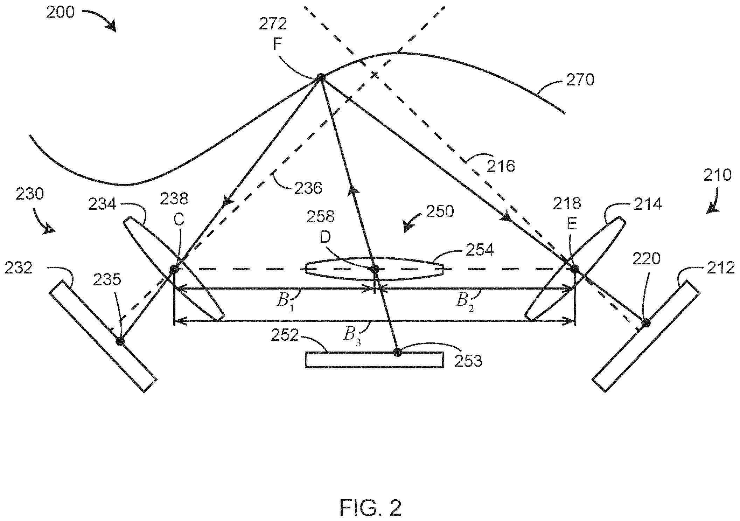

FIG. 2 shows an embodiment of a triangulation scanner 200 that includes a projector 250, a first camera 210, a second camera 230, and a processor (not shown). The projector includes a projection component 252 and a lens 254. The projection component 252 generates a pattern of light that includes an illuminated point 253 that is projected through a perspective center 258 (point D) of the lens 254 in a ray of light that strikes an object 270 at a point 272 (point F). The first camera 210 includes a photosensitive array 212 and a lens 214. The optical axis of the first camera 210 is indicated by the line 216. A ray of light emerges from the spot or point 272 and passes through a perspective center 218 (point E) of the lens 214 before striking the photosensitive array 212 at the point 220. The second camera 230 includes a photosensitive array 232 and a lens 234. The optical axis of the second camera 230 is indicated by the line 236. A ray of light emerges from the spot or point 272 and passes through a perspective center 238 (point C) before striking the photosensitive array 232 at the point 235. Three baseline distances are present in the triangulation scanner 200: $B_1$, $B_2$, and $B_3$. These three baseline distances correspond to the three triangles C-D-F, D-E-F, and C-E-F. In an embodiment, the three triangles are used in performing calculations. In other embodiments, the triangle C-E-F that uses the baseline

$B_3$ between the camera perspective centers 218 and 238 is found to give more accurate results than the other triangles and is used. A potential advantage of a triangulation scanner that includes two cameras as well as a projector is that a single camera may be able to see (i.e. within a field of view) in a region not visible to the both cameras. In this case, the projector and the single camera may be used to determine 3D coordinates of a region otherwise not available for measurement.

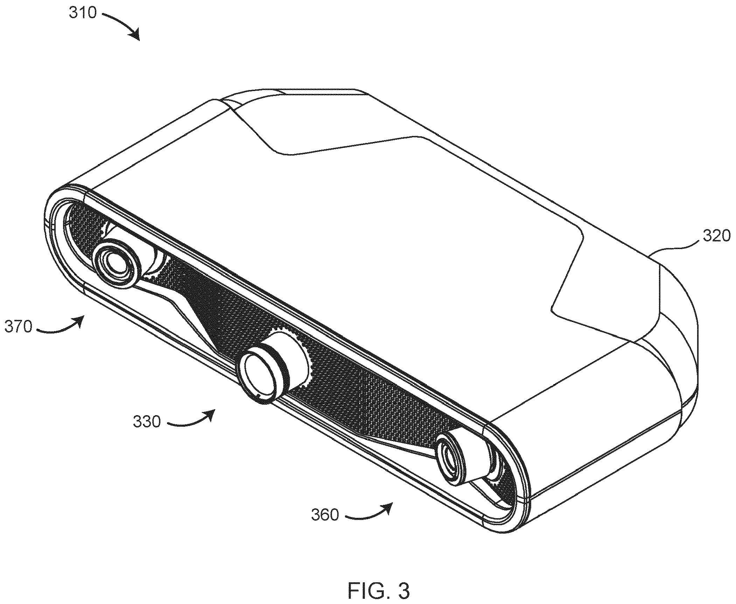

FIG. 3 is a perspective view of an area triangulation scanner 310 according to an embodiment. The area triangulation scanner 310 includes a frame 320, a projector 330, a first camera assembly 360, and a second camera assembly 370.

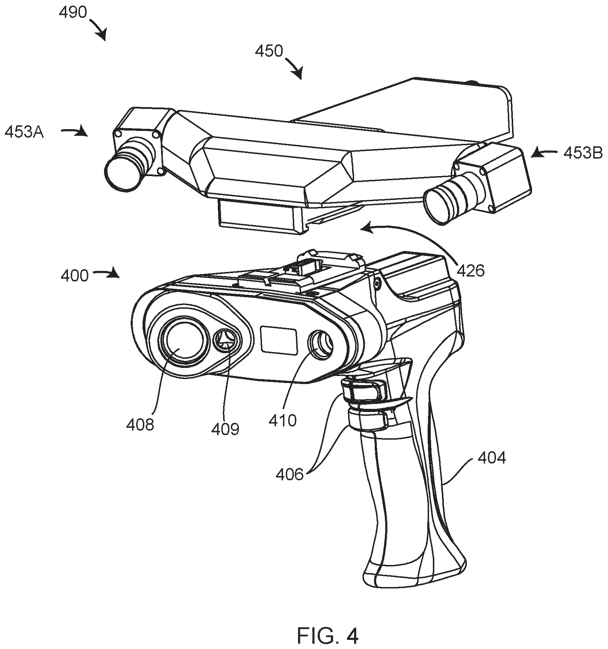

FIG. 4 is a perspective view, partly exploded, of a handheld measuring device 490 having a triangulation line scanner 400 (sometimes called a laser line probe) and a registration camera 450. In an embodiment, the triangulation line scanner 400 and the registration camera 450 interconnect mechanically and electrically through a connector assembly 426. In an embodiment, the triangulation line scanner 400 may also be configured for use with another instrument such as an articulated arm coordinate measurement machine through the connector assembly 426. In other embodiments, the triangulation line scanner 400 and the registration camera 450 are not connected by a connector assembly 426 but form a unitary structure.

In an embodiment, the triangulation line scanner 400 includes a projector 410, a camera 408, and distance indicator 409, a handle 404, and actuator buttons 406. In an embodiment, the projector 410 projects a line that is approximately perpendicular to the line connecting the perspective centers of the projector 410 and the camera 408. In this case, if the line connecting the perspective centers of the projector 410 and the camera 408 is horizontal, the projected line is vertical. The camera 408 includes a two-dimensional (2D) photosensitive array. In an embodiment, the camera is tilted to satisfy the Scheimpflug principle as a way of correcting perspective distortion in the received image. In an embodiment, the pattern of the light reflected onto the 2D photosensitive array of the camera 408 indicates the 3D coordinates of the object under test. In an embodiment, one axis of the photosensitive array indicates distance to object points, while the other axis of the photosensitive array indicates angle to corresponding object points.

In an embodiment, the registration camera 450 is used to locate registration markers, which may be placed on the object under test or outside the object under test. In another embodiment, the registration camera 450 identifies natural target points associated with the object rather than registration markers. Such target points are sometimes referred to as interest points and may include feature points such as those obtained from corner detection or from feature description, for example, by using scale-invariant feature transform (SIFT) described in U.S. Patent No. 6,711,293, the contents of which are incorporated herein by reference. In an embodiment, the registration camera includes a first camera 453A and a second camera 453B. In an embodiment, when markers are used, the markers are placed on a frame used to fixture the object under test. In other embodiments, the markers are placed at other locations in the environment. In an embodiment, the cameras have a wide FOV capable of capturing many common markers in the multiple sets of 3D coordinates obtained by the triangulation line scanner 400. In another embodiment, the registration camera 450 includes only one camera such as the first camera 453A, rather than two cameras.

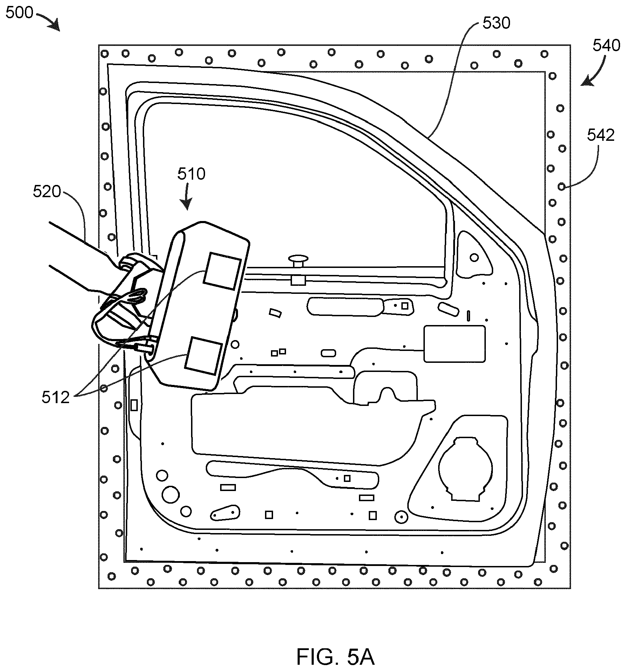

In an embodiment illustrated in FIG. 5A, a system 500 includes a noncontact 3D measuring device 510, an object 530, and a fixture 540 that holds the object 530. In an embodiment, noncontact 3D measuring device 510 is a triangulation scanner such as the area triangulation scanner 310. In an embodiment, the area triangulation scanner 310, which is attached to a robot 520, includes one or more wide field-of-view (FOV) cameras 512. In an embodiment, the fixture 540 includes registration markers 542 that are measured by the one or more cameras 512. In the example shown in FIG. 5A, the object 530 is a car door. In a 3D measurement method illustrated in FIG. 5A, the wide FOV camera(s) 512 provide a way to register the multiple widely spaced registration markers 542 into a common frame of reference, thereby enabling a plurality of 3D scan measurements, each covering a smaller FOV, to be stitched together to provide a single registered 3D image. In other words, in this example, 2D images obtained by the registration cameras 512 may enable measured 3D points of the object 530 to be registered into a common frame of reference.

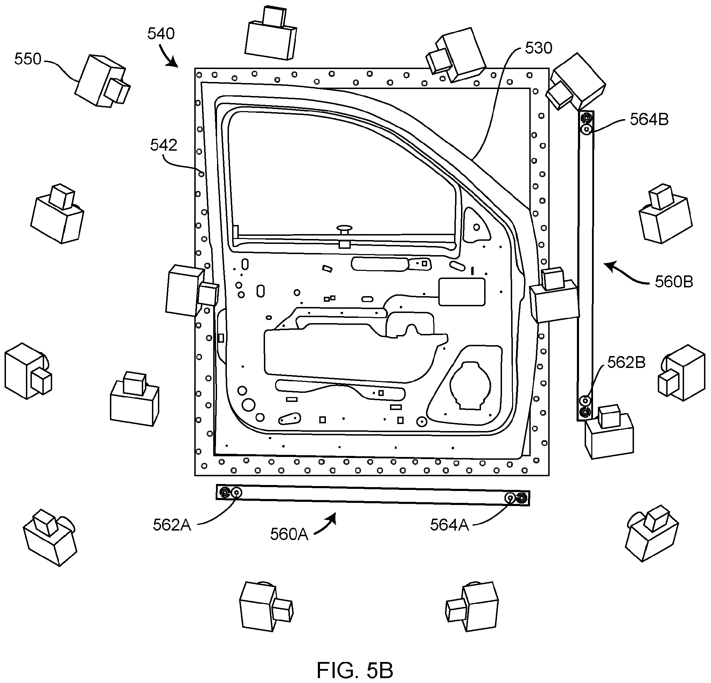

FIG. 5B shows an example in which images obtained by a photogrammetry camera 550 in a multiplicity of poses (suggested by the 16 camera poses of FIG. 5B) are used by a processor to register the multiple registration markers 542 into a single large 3D image. In an embodiment, one or more scale bars 560A, 560B are imaged by the photogrammetry camera 550. Calibrated reference distances are known between reference nests 562A, 564A for scale bar 560A and between reference nests 562B, 564B for scale bar 560B. A processor uses the measured reference distances of the scale bars 560A, 560B to provide a length scale for the registration markers 542 registered in the single large 3D image. In an embodiment, the photogrammetry camera further extracts 3D coordinates of features of the object 530. In another embodiment, a noncontact 3D measuring device such as the measuring device 510 is used to determine 3D coordinates of features of the object 530, while a single 3D image obtained by the photogrammetry camera 600 in the multiplicity of poses covers a relatively large volume. This single 3D image is used to assist in registering the 3D coordinates of the object features obtained by the noncontact 3D measuring device 510.

In some cases, the approaches described in FIGs. 5A, 5B result in errors in registering the multiple 3D images of the object 530. One cause of such errors is the placement of the registration markers 542 to be nearly coplanar, as illustrated in the embodiments of FIGs. 5A, 5B. Such errors in registration may also result when there are not enough markers present, especially in relation to the overlapping FOVs of the noncontact 3D measuring device.

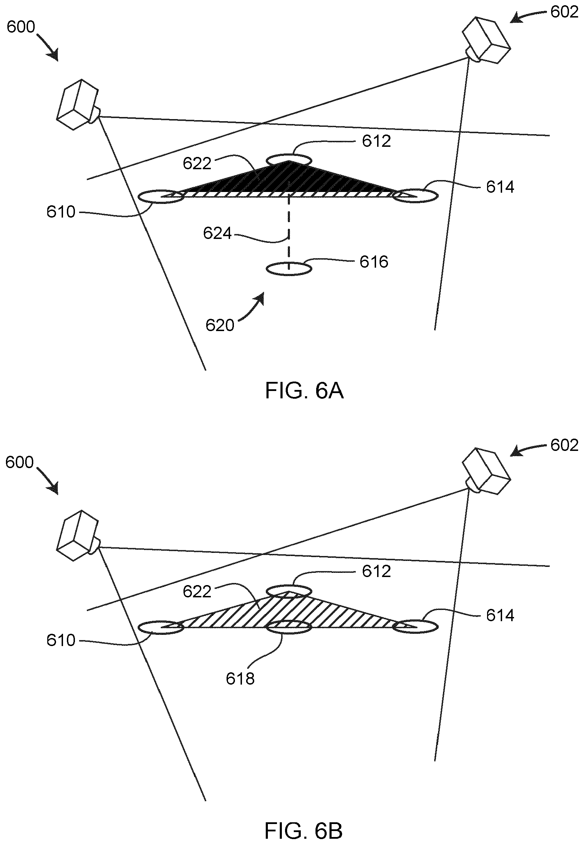

The placement of markers in FIGs. 6A, 6B illustrate the effect of varying the depth of registration markers when viewed by a camera in a first pose 600 at a first time and by the same camera in a second pose 602 at a second time. The term "pose" here means the six degrees of freedom of the camera. The six degrees of freedom may include three translational degrees of freedom (e.g., x, y, z) and three orientational degrees of freedom (e.g., roll angle, pitch angle, yaw angle). In an embodiment, the first pose and the second pose are defined in relation to a frame of reference of the object under test.

In FIG. 6A, three registration markers 610, 612, 614 lie on a plane, while a fourth registration marker 616 lies below the plane. The dashed line 624 represents the altitude of a tetrahedron 620 having an apex 616 and a base 622, where the base 622 has base vertices 610, 612, 614. In FIG. 6A, the tetrahedron 620 is arranged to place the base 622 above the apex 616. A first image obtained by the camera in the first pose 600 and a second image obtained by the camera in the second pose 602 together provide a relatively large amount of information to enable registering of object points captured in the first pose and object points captured in the second pose. This relatively large amount of information arises from the relatively large shift of the apex point 616 in relation to the base points 610, 612, 614 when viewed in the first image and the second image.

In FIG. 6B, the three registration markers 610, 612, 614 lie on a plane, and the fourth registration marker 618 likewise lies on the same plane. A first image obtained by the camera in the first pose 600 and a second image obtained by the camera in the second pose 602 together provide a relatively small amount of information to enable registering of object points captured in the first pose and object points captured in the second pose. This relatively small amount of information arises from the relatively small shift of the point 618 in relation to the base points 610, 612, 614 when viewed in the first image and the second image.

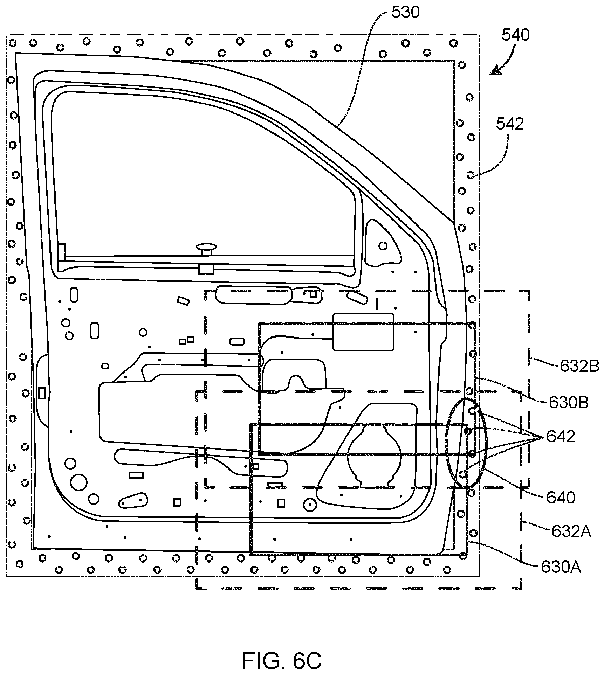

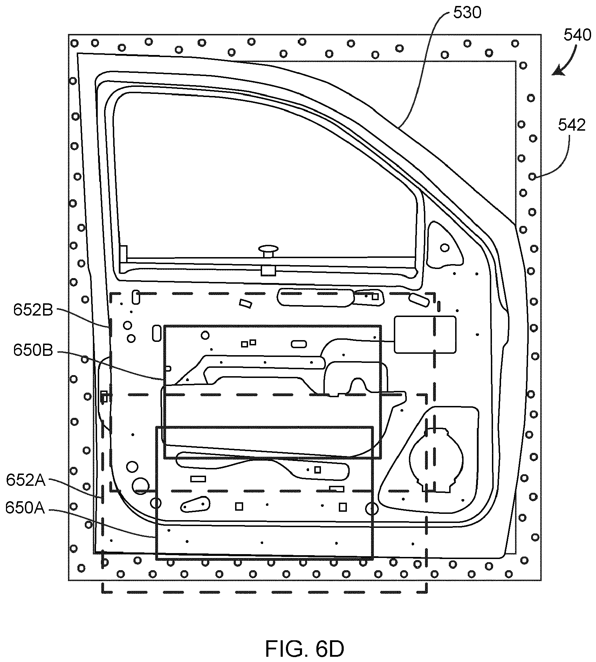

Another limitation in the use of registration markers arises from the requirement that a relatively large number of registration targets be provided to get adequate registration. Examples of this limitation are illustrated in FIGs. 6C, 6D. In FIG. 6C, in a first instance, a triangulation scanner or measuring device 510 having a camera such as 360, 370 and a projector such as 330 obtains 3D coordinates over a region 630A. A wide FOV camera (such as camera 512) coupled to the triangulation scanner or measuring device 510 captures an image over a larger region 632A. In a second instance, the triangulation scanner obtains 3D coordinates over a region 630B. The wide FOV camera coupled to the triangulation scanner captures an image over a larger region 632B. A collection of registration targets 642 are visible in a region 640 within the overlap of the regions 632A, 632B. As can be seen, relatively few registration targets 642 are visible in the first instance and the second instance. Consequently, registration is relatively weak in this case.

In FIG. 6D, in a third instance, a triangulation scanner or measuring device 510 obtains 3D coordinates over a region 650A. A wide FOV camera coupled to the triangulation scanner or measuring device 510 captures an image over a larger region 652A. In a fourth instance, the triangulation scanner or measuring device 510 obtains 3D coordinates over a region 650B. The wide FOV camera coupled to the triangulation scanner or measuring device 510 obtains 3D coordinates over a larger region 652B. In this case, there are no targets or registration markers 542 that overlap the regions 652A, 652B, which eliminates the possibility of registration between these regions without attaching some registration markers to the object 530 or using features of the object 530 for registration. Although it would be possible to affix registration markers to the object 530, users seldom desire to attach registration markers to an item under test 530 because, in many cases, those registration markers would have to be removed before shipping the completed product.

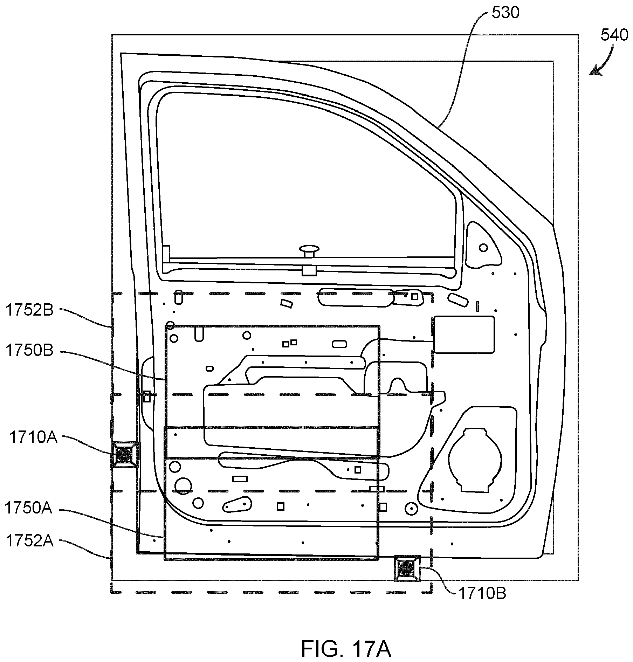

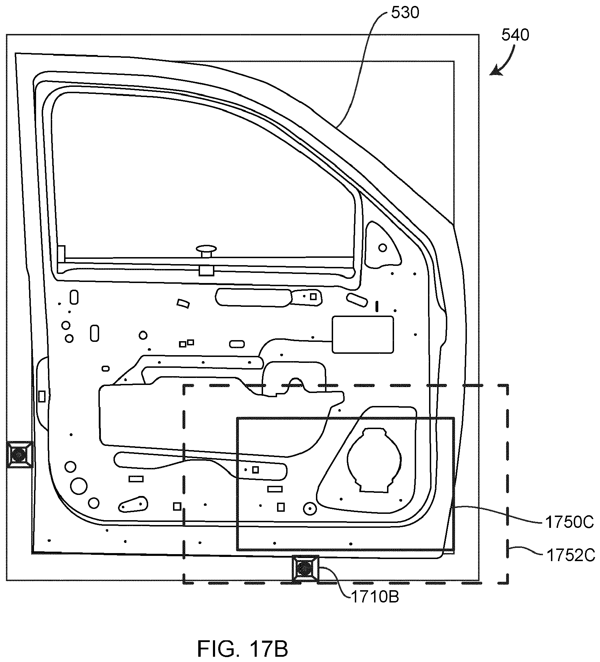

In an embodiment, polarization cameras and polarization markers are used to eliminate these shortcomings in the use of ordinary cameras with ordinary registration markers, as further described herein below in reference to FIGs. 17A, 17B.

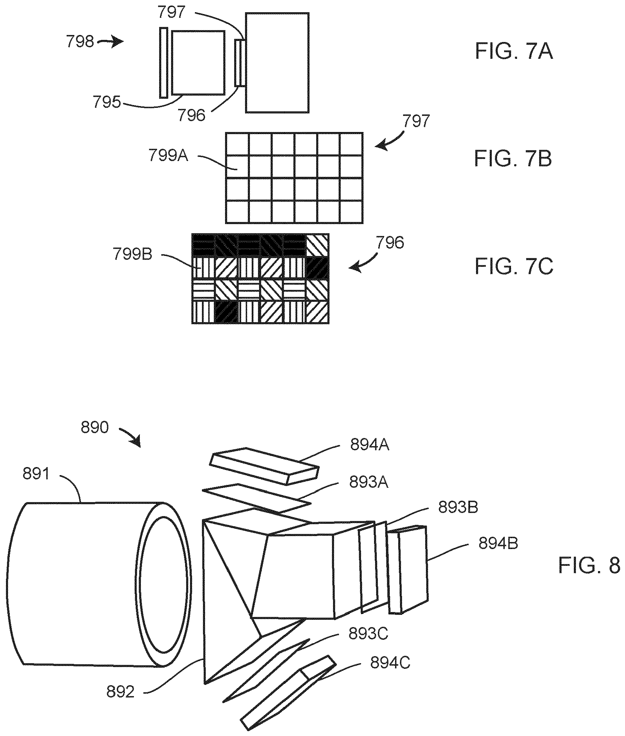

FIGs. 7A, 7B, 7C depict a polarization camera 798 having a lens 795, a photosensitive array 797, and a polarization grid 796 placed between the lens 795 and the photosensitive array 797. In an embodiment, the polarization grid 796 includes a plurality of small linearly polarized filters 799B rotated to at least three different angles. FIG. 7B depicts a portion of the photosensitive array 797 having pixel elements 799A aligned to corresponding polarization filter elements 799B of the polarization grid 796, where elements of the polarization grid 796 are aligned to pixels 799A of a photosensitive array 797. The polarization camera 798 may further include an optical filter that passes selected wavelengths of light.

FIG. 8 is a polarization camera 890 that includes a lens 891, a beamsplitter prism 892, three or more linear polarizing filters 893A, 893B, 893C and three or more photosensitive arrays 894A, 894B, 894C. The photosensitive arrays include support electronics. The polarization camera 890 may further include an optical filter than passes selected wavelengths of light. In an embodiment, an optical filter coating is applied to one or more lens elements. In another embodiment, an optical filter is included as a separate glass filter element.

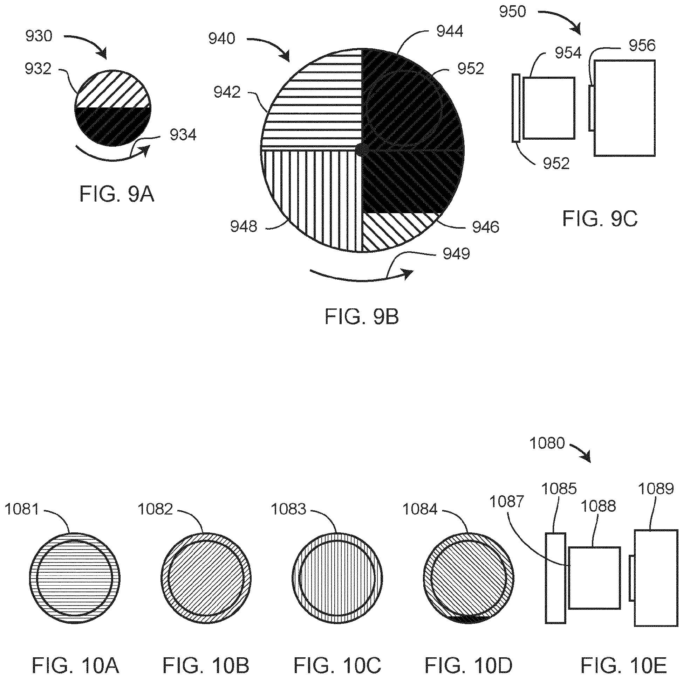

FIG. 9A illustrates a polarizer assembly 930 that includes a linear polarizer 932 and a rotation mechanism 934 that enables rotation to three or more angles, either by hand or by activating a motor. FIG. 9B illustrates an embodiment for a polarizer assembly 940 that includes three or more linear polarizers 942, 944, 946, 948, each having a different angle of polarization. The polarizer assembly 940 further includes a rotation mechanism 949 for rotating the polarizers one at a time in front of or behind an aperture 952. The polarizer assembly 930 or 940 is placed in front of camera assembly 950 (FIG. 9C) that includes aperture 952, lens 954, and photosensitive array 956, which further includes support electronics. The camera assembly 950 may further include an optical filter than passes selected wavelengths of light. The combination of the polarizer assembly 930 or 940 and the camera assembly 950 is referred to as a polarization camera.

FIGs. 10A, 10B, 10C, 10D illustrate different polarization states 1081, 1082, 1083, 1084 obtained by an electro-optic assembly 1085 of a polarization camera 1080. In an embodiment, the electro-optic assembly 1085 includes a liquid-crystal polarizer and support elements. Further elements of the polarization camera 1080 include lens 1088 and photosensitive array 1089. The polarization camera 1080 may further include an optical filter 1087 that passes selected wavelengths of light. In an embodiment, the optical filter 1087 is applied as a coating to one or more lens elements. In another embodiment, the optical filter 1087 is included as a separate glass filter element.

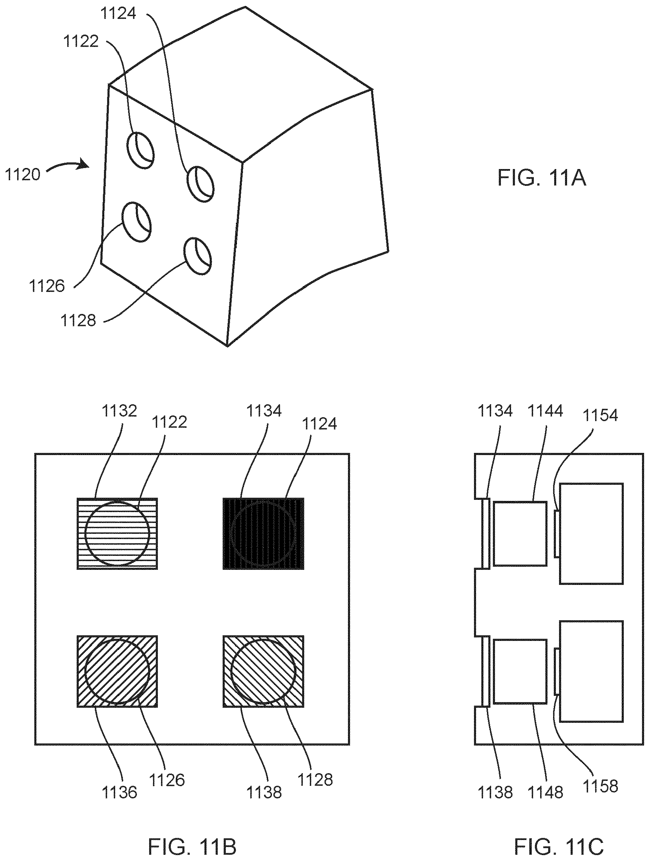

An embodiment of a polarization camera 1120 is shown in FIGs. 11A, 11B, 11C. The polarization camera 1120 includes apertures 1122, 1124, 1126, 1128, each followed by a corresponding polarizer 1132, 1134, 1136, 1138, respectively. In an embodiment, the polarizers 1132, 1134, 1136, 1138 have corresponding linear polarization angles of 0, 90, 45, 135 degrees, respectively. In another embodiment, there are only three linear polarizers rather than four. The polarizers are positioned adjacent to lenses and photosensitive arrays having supporting electronics. In an embodiment illustrated in the schematic side view FIG. 11C, the polarizer 1134 is positioned adjacent to lens 1144 and photosensitive array 1154, and the polarizer 1138 is positioned adjacent to lens 1148 and photosensitive array 1158.

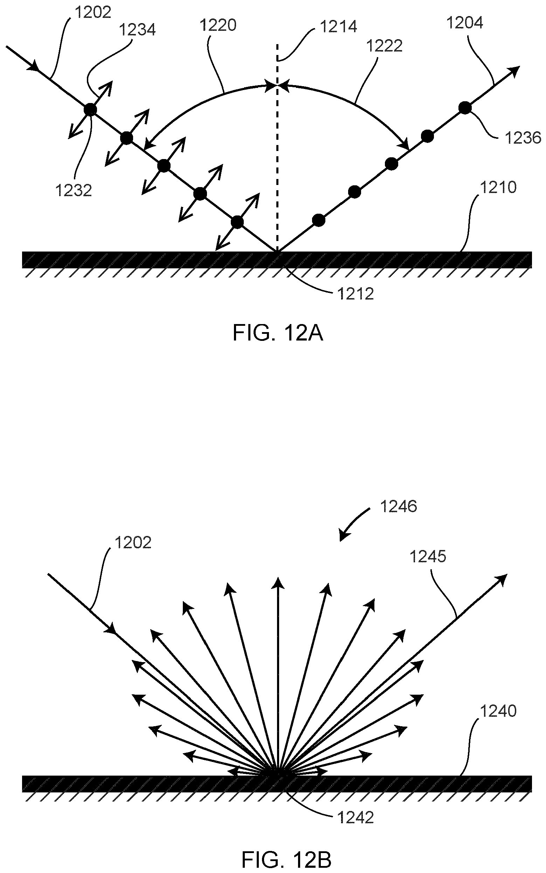

FIG. 12A shows a ray of light 1202 striking a dielectric material 1210 at a point 1212, which thereafter undergoes a type of reflection referred to as specular reflection. A normal vector 1214 is drawn perpendicular to the material 1210 at the point 1212. A plane that includes the ray of light 1202 and the normal vector 1214 is referred to as the plane of incidence. The angle between the incident ray of light 1202 and the normal vector 1214 is referred to as the angle of incidence 1220. Polarization of the light in the ray of light 1202 may be decomposed into two linear components: an *s* polarization 1232 perpendicular to the plane of incidence and a *p* polarization 1234 in the plane of incidence. Both *s* polarization and *p* polarization components are perpendicular to the ray of light 1202. For a dielectric material 1212, a portion of the incident ray of light 1202 reflects off the material 1210 in a ray 1204 having at an angle of reflection 1222 equal to the angle of incidence 1220. When the angle of incidence 1220 and angle of reflection 1222 equal zero degrees, there is no distinction between *s* and *p* polarization and both types of polarization behave in the same way. However, as the angle of incidence 1220 increases above zero degrees, the relative proportion of reflected *p* polarization declines in relation to the reflected *s* polarization. When the angle of incidence 1220 equals an angle referred to as the Brewster's angle, the fraction of *p* polarization reflected from the material 1210 falls to zero so that the reflected light has *s* polarization 1236. FIG. 12A illustrates the special case in which the angle of incidence 1220 equals Brewster's angle. This is evident from the figure since the reflected ray 1204 includes no *p* polarized light.

FIG. 12B show a ray of light 1202 striking a second dielectric material 1240 at a point 1242, which partly undergoes a specular reflection of a ray 1245 and partly undergoes a diffuse reflection in which reflected rays of light 1246 travel in a variety of directions rather than a single direction.

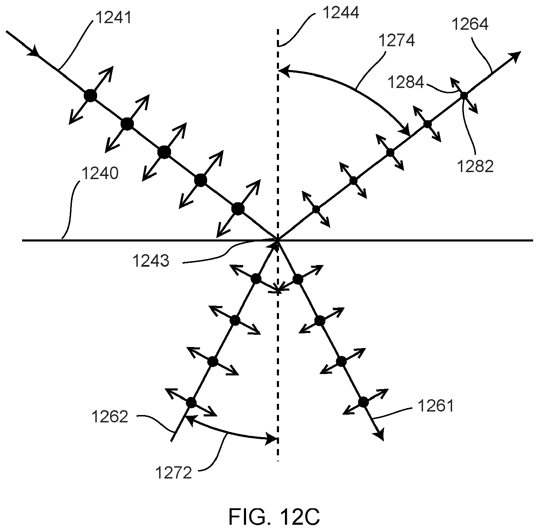

FIG. 12C illustrates the mechanism responsible for diffuse reflection off a dielectric material 1240. The light 1241 striking the surface 1240 interacts with the dielectric material in a shallow region near the surface 1240, passing into the material in a ray of light 1261. In most cases, the light in the shallow region of material undergoes multiple scattering events within the material. After a final scattering event, a representative ray of light 1262 in the material passes into the air as a ray 1264. The ray of light 1262 need not emerge from the exact entry point 1243. The ray of light 1262 in the material following the final scattering event emerges at an angle 1272, and the ray of light transmitted into the air has an angle 1274. These angles satisfy Snell's Law where the angle of incidence is 1272, the angle of transmittance is 1274, the index of refraction of the incident ray is the index of refraction n of the material, and the index of refraction of the transmitted ray is the index of refraction of air, which equals one. In general, diffusely scattered light tends to have a higher proportion of *p* polarized light 1284 than *s* polarized light 1282, although the *s* polarized light does not drop to zero for angle 1274.

In general, for diffuse scattering, there will be several rays of light 1262 passing out of the material into the air, each of the emerging rays of light 1264 lying in a different plane. Each of the planes that contain these emerging rays 1264 further contains the vector 1244 normal to the material surface. In this sense, the planes on which the emerging rays reside are equivalent to the plane of incidence, but there will several such planes, each corresponding to one of the diffusely scattered rays of light. This is one way that diffuse reflection (i.e., scattered light) is different than specular reflection for which the incident ray and reflected ray both lie on the single plane of incidence.

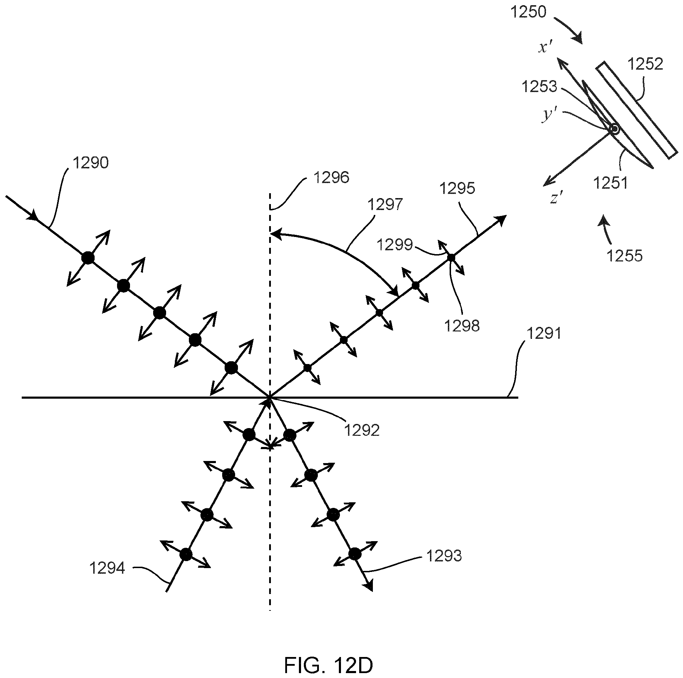

FIG. 12D shows the general situation in which reflected light may be specular, diffuse, or a combination of the two. A ray of light 1290 enters the surface 1291 at a point 1292. Some of the light reflects specularly at an angle of reflection 1297, and some of the light reflects diffusely, entering the surface 1291 in a final scattered ray 1293 and exiting the material as a ray 1294 before passing into the air as a ray of light 1295. The angle of reflection 1297 is drawn relative to the normal vector 1296. In general, diffusely reflected light will lie on many planes following reflection, as explained in the last paragraph.

A camera 1250 includes a lens 1251 and a photosensitive array 1252, the lens having a perspective center 1253. The camera 1250 has a frame of reference 1255 with an origin at the perspective center 1253, an x' axis in the plane of the paper, a y' axis pointing into the paper, and a z' axis pointing toward the reflected ray of light 1295. The reflected light 1295 has some combination of s polarization 1298 and p polarization 1299. If the light 1295 is diffusely reflected, it will contain mainly p polarization and hence align to the x' or -x' axis. If the light 1295 is specularly reflected, it will contain mainly s polarization and hence align to the y' or -y' axis. For a spherical coordinate system drawn with respect to the surface 1291 and point 1292, the angle of reflection 1297 can be considered a zenith angle drawn with respect to the normal vector 1296. For this fixed zenith angle 1297, there is a corresponding azimuth angle of light reflecting off the surface 1291 corresponding to an angle of rotation about the normal axis 1290.

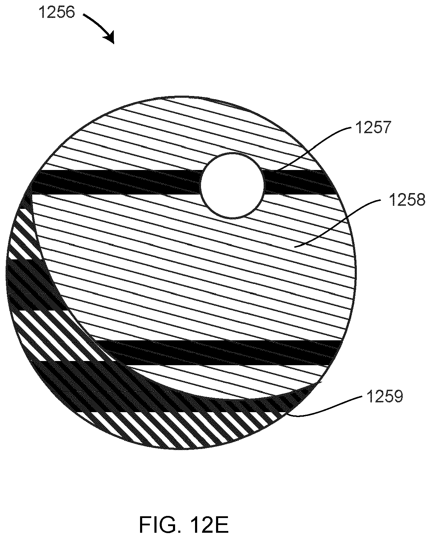

FIG. 12E shows a ball 1256 illuminated by an overhead light. The area 1257 is a relatively bright reflection, which may include a relatively large proportion of specularly reflected light. The area 1259 includes a portion of the ball that is mostly in shadow, while the area 1258 includes a region having a level of illumination intermediate between the areas 1257 and 1259. If the ball is made of a dielectric material, the regions 1258 and 1259, which are not so directly illuminated by the overhead light, are likely to include much more p polarized light than s polarized light. Hence in most practical cases in which dielectric materials are used, the reflected light is diffusely reflected. It is also true that the degree of polarization, discussed further herein below, becomes smaller when specular and diffuse reflections are mixed together. In an embodiment, the reflected light is taken to be diffusely reflected except in one of two cases: the reflected light is bright enough to saturate the camera pixels (which would indicate mostly specularly reflected light) or the degree of polarization exceeds 0.3 (which would indicate a substantial amount of both specular and diffuse reflected light).

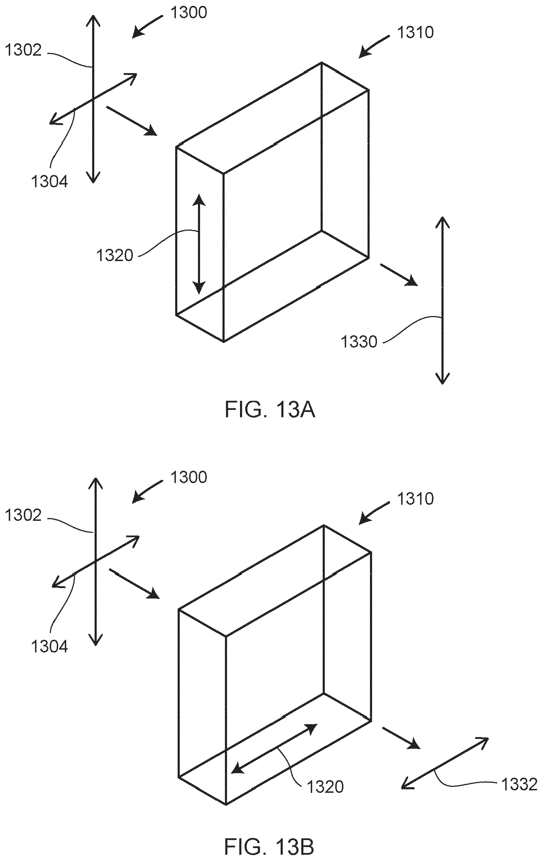

FIGs. 13A, 13B show light 1300 having a first (vertical) polarization component 1302 and a second (horizontal) polarization component 1304 orthogonal to the first polarization component 1302. In FIG. 13A, the light 1300 is incident on a linear polarizer 1310 oriented to place the transmission axis 1320 of the linear polarizer 1310 in a vertical direction. If the linear polarizer 1310 were considered an ideal polarizer, the transmitted light 1330 would be linearly polarized in the vertical direction. In a real polarizer a small amount of polarization orthogonal to the transmission axis will also pass through the linear polarizer 1310. In FIG. 13B, the linear polarizer 1310 is oriented to place the transmission axis 1320 in a horizontal direction. In an embodiment where the linear polarizer can be treated as an ideal polarizer, the transmitted light 1332 passes through the polarizer with a horizontal polarization.

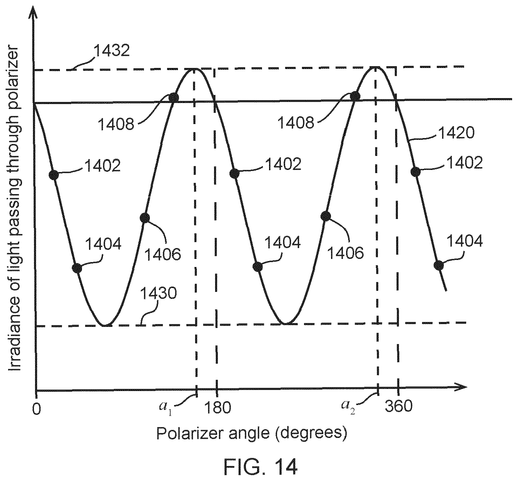

There is a type of light referred to as unpolarized light comprising short wave trains of differing polarization that are distributed randomly. Many light sources such as the sun and incandescent lamps emit light that is unpolarized or nearly unpolarized. After striking a dielectric material at a non-zero angle of incidence, randomly polarized light reflects off the dielectric material and may undergo specular or diffuse scattering. For specular reflection, the reflected light has a larger amount of s polarization than p polarization. For diffuse reflection, the reflected light has a larger amount of p polarization than s polarization. The reflected light is said to be partially polarized, which is to say that it includes an unpolarized portion and a linearly polarized portion. If such partially polarized light is sent through a polarizer that is rotated through a multiplicity of angles covering 180 degrees, the observed irradiance (light power per unit area) passed through polarizer can be seen to vary sinusoidally with the rotation angle of the polarizer, as shown in FIG. 14.

In FIG. 14, a polarizer placed in front of a camera is rotated over rotation angles from 0 to 360 degrees, as indicated on the horizontal axis. A photodetector is used to measure the optical power passing through the polarizer and from this the irradiance (optical power per unit area) is measured, as indicated on the vertical axis. As can be seen in FIG. 14, one complete sinusoidal cycle is completed for each 180-degree rotation of the polarizer. In an embodiment, measurements of the irradiance and angle are made at the collections of points such as the points 1402, 1404, 1406, and 1408. These points are used to construct the sinusoidal plot 1420. The irradiance varies from a minimum or first value 1430 to a maximum or second value 1432.

It can be shown that the sinusoidal plot 1420 has irradiance values proportional to $\cos(2(a - a_{max}) / 360)$, where $a$ is the angle of the polarizer and $a_{max}$ is the angle of the polarizer at which the value is at a predetermined value or a maximum value. In this equation, $a$ and $a_{max}$ are in units of degrees. If the reflected light is known to be either specularly reflected or diffusely reflected, the orientation of a dielectric material may be determined by noting the rotation angle of the polarizer at which the signal level received by a camera photodetector is at a predetermined level or a maximum level.

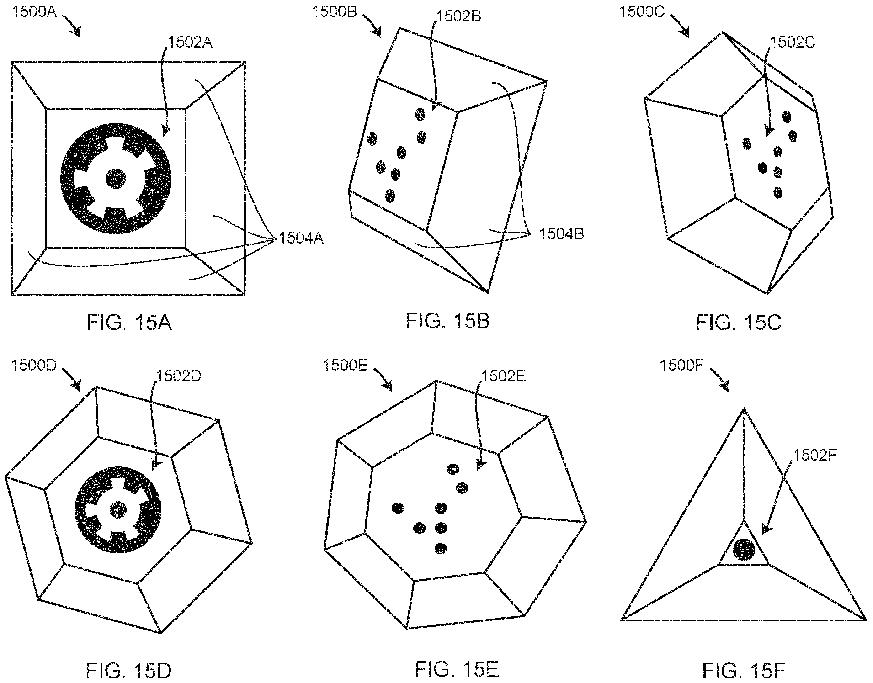

FIGs. 15A, 15B, 15C, 15D, 15E, 15F are views of a selection of possible polarization targets according to embodiments of the present disclosure. In each case, the targets are made of material having relatively low conductivity. So, for example, the materials used would not be bare metal. Also, carbon fiber-based structures do not usually work well because the shape and orientation of the individual fibers alter the polarization strongly, in many cases with little relation to the actual geometry. Based on experiments, it has been found that suitable materials include porcelain (such a smooth cup), plastics (such as a polypropylene storage container), and rubber (such as cables). Therefore, the polarization target may be made from a non-metallic material. Dark or black materials have been found to perform well for this purpose. This may be explained by the Umov effect, which states that the degree of linear polarization of light is inversely proportional to the albedo of an object. Hence dark objects, which have lower albedo, have a larger degree of linear polarization. Metals having a black anodized oxide coating (such as aluminum oxide) is another target material that has been found to perform well.

In FIGs. 15A, 15B, 15C, 15D, 15E, 15F, each target 1500A, 1500B, 1500C, 1500D, 1500E, 1500F, respectively, includes at one or more marks 1502A, 1502B, 1502C, 1502D, 1502E, 1502F, respectively, used to identify and locate the target, and three or more sloping sides 1504A, 1504B, 1504C, 1504D, 1504E, 1504F, respectively. FIG. 15F includes three sloping sides; FIGs. 15A, 15B include four sloping sides; FIGs. 15C, 15D include six sloping sides; and FIG. 15E includes seven sloping sides. The marks on FIGs. 15A, 15D include a spoke pattern that serves as an identifier and a circular spot that serves as a location mark. The marks on FIGs. 15B, 15C, 15E include a multiplicity of dots that serve to identify and locate the targets 15B, 15C, 15E. The single dot on FIG. 15F serves as a locator mark.

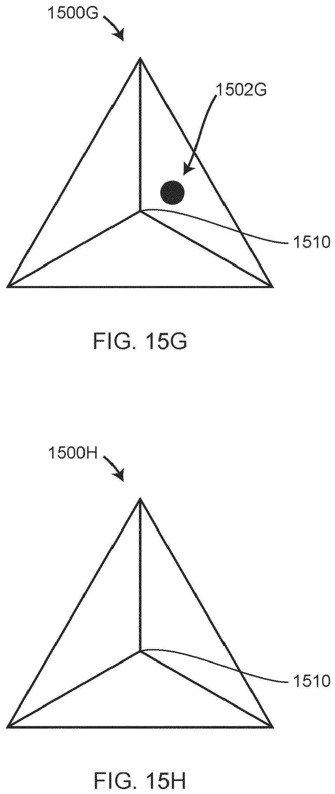

FIGs. 15G, 15H are top views of polarization targets 1500G, 1500H, respectively, each having three surfaces. In an embodiment, the three surfaces meet in a single apex point 1510. The polarization target 1500G further includes a location mark 1502G. The apex point 1510 may also serve as a location mark, the position of which on an image may be determined as the point of intersection of the edges that separate the three surfaces.

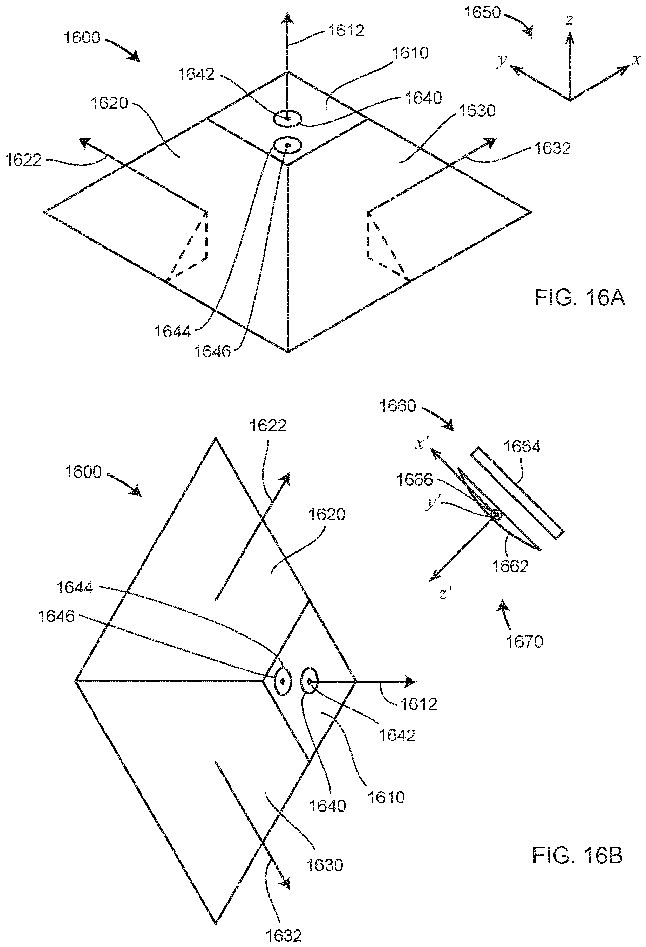

FIG. 16A is a perspective view of an exemplary polarization target 1600 having a marker surface 1610 that includes a marker 1640 having a center 1642 and a marker 1644 having a center 1646. In an embodiment, the polarization target 1600 further includes four sides, two of the sides or surfaces 1620, 1630 being visible in FIG. 16A. Each of the four sides slopes away from the marker surface 1610 at an angle of 45 degrees. The surfaces 1620, 1630 have outward facing normal vectors 1622, 1632, respectively. The marker surface 1610 has an outward facing normal vector 1612. A geometrical representation of the polarization target 1600 is provided to a processor that performs calculations described below. Such geometrical characteristics include angles, dimensions, and positions of markers. The geometrical characteristics provided to a processor are given in a frame of reference 1650 that in an embodiment includes $x$, $y$, $z$ axes.

FIG. 16B shows the polarization target 1600 in an arbitrary orientation relative to a polarization camera 1660. The polarization camera 1660 includes a lens 1662 and a photosensitive array 1664. The polarization camera 1660 further includes a perspective center 1666 through which rays of light are considered to pass. The polarization camera 1660 has a camera frame of reference 1670, which in an embodiment includes the axes $x'$, $y'$, $z'$, where the $z'$ axis is the direction pointing into the polarization camera 1660 along the camera optical axis. In an embodiment, the polarization camera 1660 includes oriented polarization elements 799B as in FIGs. 7A, 7B, 7C. In other embodiments, other types of polarization cameras are used.

Each of the marker surfaces 1610, 1620, 1630 illuminate pixels covering a region of the photosensitive array 1664. The polarization camera provides the provides polarization information for the light illuminating these regions. The irradiance at each of the three or more polarization angles is exemplified by the points 1402, 1404, 1406, 1408 in FIG. 14. Such irradiances may be used to determine polarizer angles such as $a_1$ and $a_2$ at which the transmitted irradiance is at a predetermined level or a maximum level. These determined angles and the location of the target center 1642 may be used to align the target representation to its correct position and orientation in space using mathematical methods such as those now described.

The "degree of polarization" DoP of light reflected off a surface is DoP = $(I_{max} - I_{min})/ (I_{max} + I_{min})$, where $I_{max}$ corresponds to the level 1432 and $I_{min}$ corresponds to the level 1430 in FIG. 14. The DoP can be used to determine the zenith angle of the normal vector of a surface with respect to the $z'$ vector. The zenith angle of a vector in the camera frame of reference 1670 is the angle between the vector and the positive $z'$ axis. However, the calculation of the DoP may be error prone and demands prior knowledge of the refractive index of the polarization target material. The zenith angle of the normal vector is not needed or used in the method described herein below.

Each of the angles $a_1$ and $a_2$ in FIG. 14 corresponding to a predetermined value (e.g. the maximum value) of the sinusoid in FIG. 14 are referred to referred to as an "angle of polarization" AoP. The AoP represents the azimuth angle of the normal vector. The azimuth angle of a normal vector in the camera frame of reference 1670 is the angle between the $x'$ axis and a projection of the normal vector onto the $x'$-$y'$ plane. FIG. 14 shows that the two angles of polarization $a_1$, $a_2$ refer to normal vectors having azimuth angles separated by 180 degrees. One of these normal vectors points outward from a target surface (as in the vectors 1612, 1622 and 1632 in FIG. 16A), while the other normal vector points inward from the target surface. As a matter of convention, the normal vectors of interest are taken to point outward from the target.

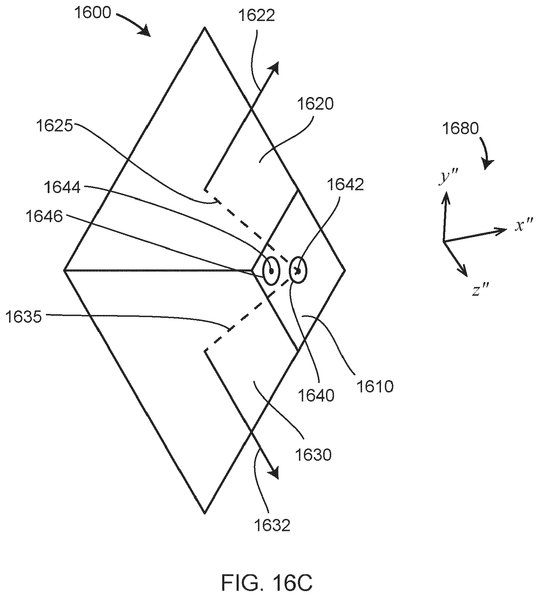

In FIG. 16C, to remove the 180-degree ambiguity in the direction of the target normal vectors, lines 1625, 1635 are drawn from the marker center 1642 to the center of each target surface. By comparing the lines 1625, 1635 to the azimuth angles of the normal vectors 1622, 1632 or to the vectors directly oppositely to 1622, 1632, the desired outwardly pointing normal vectors are seen to be 1622, 1632. A way of stating this mathematically is that the dot product between desired outward facing normal vector such as the vector 1622 and a corresponding direction vector such as 1625 will have a positive value. In this case, the direction vector or line 1625 is directed from the center of the surface 1620 to the center of the marker 1642. In an embodiment, the relative positions and orientations of the markers 1640, 1644 are used to eliminate possible ambiguity in the roll angle of the polarization target relative to the polarization camera.

In general, the geometrical characteristics of the polarization target 1600 are provided to the processor in a reference coordinate system 1650, as shown in FIG. 16A. Within this coordinate system 1650, each marker surface 1610, 1620, 1630 is referenced by an integer index $k$. The normal vector for that surface $k$ in the reference coordinate system 1650 is $n_k$. To obtain corresponding surface normal vectors $p_k$ in the frame of reference 1670 of the polarization camera 1660, the normal vectors are each multiplied by a rotation matrix $\mathbf{R}$ having three rotation angles that are to be determined. In other words, $p_k = \mathbf{R}\, n_k$. For example, the rotation angles used to obtain the rotation matrix $\mathbf{R}$ might be derived from a pitch angle, yaw angle, and roll angle, or using any other type of rotation angles.

Because, in the camera frame of reference 1670, the zenith and azimuth angles of the surface normals are taken with respect to the optical axis of the camera $z'$, the surface normals of the polarization target 1600 as seen by the camera are also given as $p_k = \mathbf{R}_{az}\, \mathbf{R}_{ze}\, z'$, where $z'$ is a column vector having components 0, 0, 1. Since the AoP calculation provided the azimuth angles for the normal vector of each visible surface of the polarization target 1600, the matrix for the azimuth rotation can be determined in terms of the azimuth angles for the normal vectors of each surface k:

$$\mathbf{R}_{az} = \begin{pmatrix} \cos(az_k) & -\sin(az_k) & 0 \\ \sin(az_k) & \cos(az_k) & 0 \\ 0 & 0 & 1 \end{pmatrix} \qquad \text{(Eq. 1)}$$

The zenith rotation matrix is given in terms of the zenith angles of the normal vectors of each surface k:

$$\mathbf{R}_{ze} = \begin{pmatrix} \cos(ze_k) & 0 & \sin(ze_k) \\ 0 & 1 & 0 \\ -\sin(ze_k) & 0 & \cos(ze_k) \end{pmatrix} \qquad \text{(Eq. 2)}$$

The surface normal vectors of the polarization target, as seen in the frame of reference 1650 of the geometrical representation, are therefore given by:

$$n_k = \mathbf{R}^{-1}\, \mathbf{R}_{az}\, \mathbf{R}_{ze} \begin{pmatrix} 0 \\ 0 \\ 1 \end{pmatrix} \qquad \text{(Eq. 3)}$$

For a single surface $k$ in equation (3) above, there are four unknown angles: three angles in the rotation matrix $\mathbf{R}$ and one zenith angle in the rotation matrix $\mathbf{R}_{ze}$. Since the normal vector $n_k$ each surface $k$ of the polarization target 1600 has three coordinates (e.g., $x, y, z$), it follows that measurements by the camera of the AoP for at least two surfaces, which provides the azimuth rotation matrices for these two surfaces, yields a total of six equations. The corresponding number of unknowns for two measured surface azimuth angles is five: two unknown zenith angles and three unknown values for the matrix $\mathbf{R}$. Therefore, with six equations and five unknowns, there is enough information to solve for the orientation of the polarization target 1600 in relation to polarization camera 1660. In other words, measurement of the AoP for two surfaces of the polarization target are enough to determine the orientation of the polarization target. In an embodiment, if the normal vectors are measured on additional surfaces of the polarization target 1600, an optimization program or methodology is used to decrease or minimize the least squared errors in the fit of the modeled normal vectors to the measured normal vectors. In other embodiments, other methods of optimization are used, for example the orientation of the polarization target may be determined using an optimization program to decrease or minimize residual errors in the orientation. In an embodiment, a marker position and orientation may be determined in another frame of reference, such as the frame of reference 1680 shown in FIG. 16C. Such a frame of reference may arise, for example, because of measurements made earlier on other markers.

The polarization camera may also determine a transverse position of a polarization target based on a position of a marker on the polarization target. For example, the location of a marker such as 1502F or 1502G may be used to determine a transverse position of the polarization target. The term transverse position here means the side-to-side position of the polarization locator mark, which is to say in a plane perpendicular to the optical axis of the polarization camera. In some cases, a second marker or marker pattern may be needed to eliminate ambiguity in the roll angle of the polarization target relative to the polarization camera. Embodiments of such second markers or marker patterns are shown in the elements 1502A, 1502B, 1502C, 1502D, 1502E. In an embodiment, a polarization target is sufficiently asymmetric in its 3D shape to enable the roll angle of the polarization target to be determined without using a marker or marker pattern. A transverse position of a marker may also be determined based on recognition of a feature point, for example, a point based on an intersection of lines of the polarization marker. An example of such an intersection point is the apex point 1510 in FIGs. 15G, 15H. In an embodiment, two cameras separated by a baseline distance are used to obtain images of a marker on the polarization target or an observed target point on the polarization target. In this case, triangulation may be used to determine a distance to the marker or target point. In this case, in an embodiment, the two cameras are used to determine the three translational degrees of freedom of the polarization target as well as the three orientational degrees of freedom of the polarization target.

In FIG. 17A, in a first instance, a triangulation scanner or measuring device 510 (FIG. 5A) obtains 3D coordinates over a region 1750A. Also, in the first instance, a wide-FOV polarization camera 512 coupled to the triangulation scanner or measuring device 510 captures an image of the polarization target 1710A over a region 1752A. In a second instance, the triangulation scanner or measuring device 510 obtains 3D coordinates over a region 1750B, and the polarization camera 512 captures an image of the polarization target 1710A over a region 1752B. Using this information, a processor determines for both the first instance and the second instance the orientation of at least two of the normal vectors of the surfaces of the polarization target 1710A as well as the transverse (side-to-side) position of the polarization target 1710A. In an embodiment, the processor uses this information to register the 3D coordinates of the object 530 over the regions 1750A, 1750B in a common coordinate system. In the first instance, the polarization camera further captures a polarization target 1710B in the region 1752A.

In FIG. 17B, in a third instance, a triangulation scanner or measuring device 510 obtains 3D coordinates over a region 1750C. In an embodiment, at least one camera 512 is a wide-FOV polarization camera coupled to the triangulation scanner or measuring device 510. The polarization target 1710B is captured by the polarization camera 512 in the regions 1752A and 1752C. A processor determines in the first instance and the second instance the orientation of at least two of the normal vectors of the surfaces of the polarization target 1710B as well as the transverse position of the polarization target 1710B. In an embodiment, the processor uses the orientation and position of the target in the regions 1752A, 1752C to register the 3D coordinates of the object 530 measured by the scanner or measuring device 510. FIGs. 17A, 17B illustrate the ability of a small number of polarization targets to accurately position and orient 3D data points captured over slightly overlapping regions of space. In an embodiment, a transverse position of the polarization target may be determined based at least in part on a plurality of edge segments captured by the polarization camera.

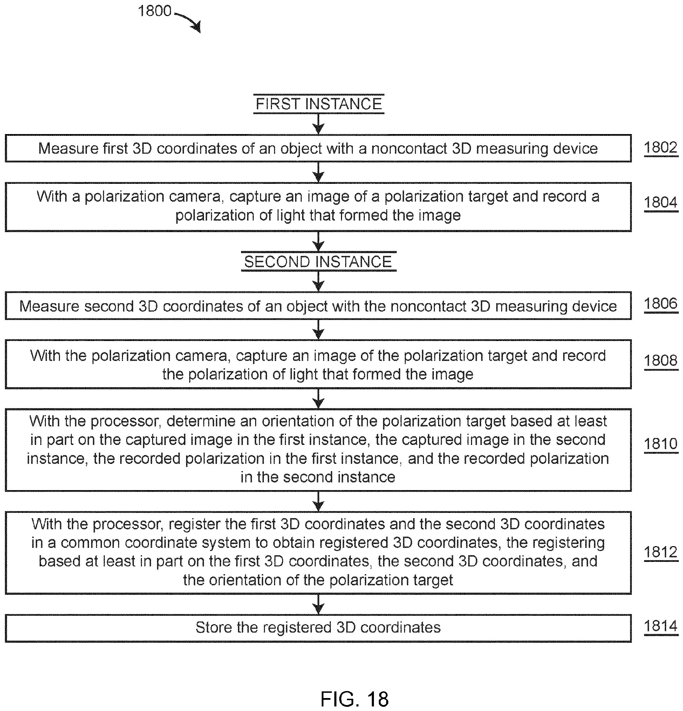

FIG. 18 is a flow chart describing a method 1800 according to an embodiment of the present disclosure. In a first instance, an element 1802 includes measuring first 3D coordinates of an object with a noncontact measuring device. In the first instance, an element 1804 includes, with a polarization camera, capturing an image of a polarization target and recording polarization of light that formed the image. In an embodiment, the noncontact 3D measuring device is a triangulation scanner such as the measuring device or area triangulation scanner 310, 510. In an embodiment, the polarization camera is attached to the triangulation scanner, as a camera 512 is attached to the scanner or measuring device 510. In an embodiment, two cameras 512 are attached to the scanner or measuring device 510. In a second instance, an element 1806 includes measuring second 3D coordinates of an object with the noncontact measuring device. In the second instance, the element 1808 includes, with the polarization camera, capturing an image of a polarization target and recording polarization of light that formed the image.

An element 1810 includes, with the processor, determining an orientation of the polarization target based at least in part on the captured image in the first instance, the captured image in the second instance, the recorded polarization in the first instance, and the recorded polarization in the second instance. An element 1812 includes, with the processor, registering the first 3D coordinates and the second 3D coordinates in a common coordinate system to obtain registered 3D coordinates, the registering based at least in part on the first on the first 3D coordinates, the second 3D coordinates, and the orientation of the polarization target. An element 1814 includes storing the registered 3D coordinates.

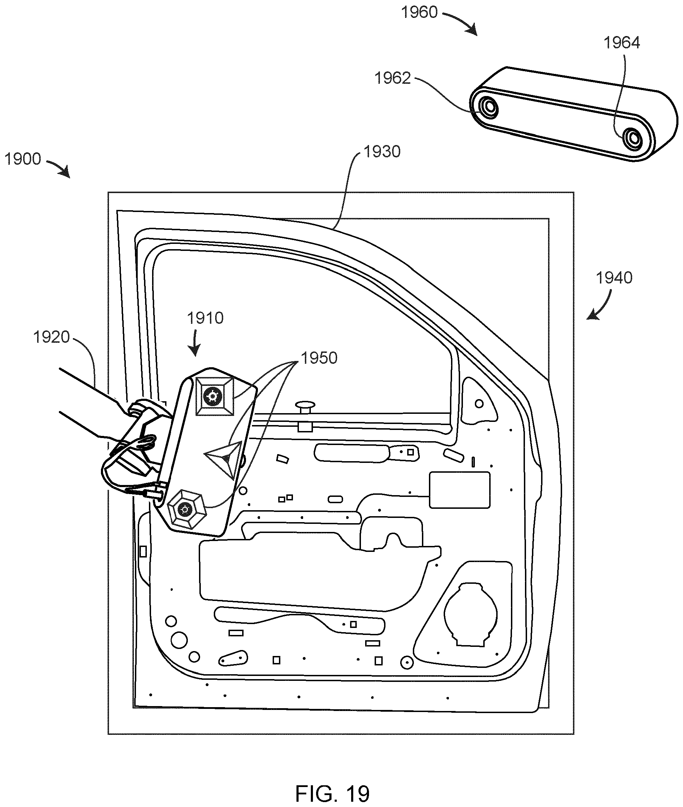

In an embodiment illustrated in FIG. 19, a system 1900 includes a noncontact 3D measuring device 1910, an object 1930, and a fixture 1940 that holds the object 1930. In an embodiment, noncontact 3D measuring device 1910 is a triangulation scanner such as the area triangulation scanner 310. In an embodiment, the area triangulation scanner 310 is attached to a robot 1920. In an embodiment, the noncontact 3D measuring device 1910 is coupled to one or more polarization targets 1950, which are measured by one or more polarization cameras such as 1962 or 1964. In an embodiment, a stereo polarization camera 1960 includes a plurality of polarization cameras 1962, 1964. In the example shown in FIG. 19, the object 1930 is a car door. In a 3D measurement method illustrated in FIG. 19, the one or more polarization cameras such as 1962 or 1964 provide a way to register the noncontact 3D measuring device as it moves to multiple positions to measure portions of the object 1930. In this way the one or more polarization cameras 1962. 1964 and the polarization targets 1950 enable a plurality of 3D scan measurements, each covering a smaller FOV, to be stitched together to provide a single registered 3D image. In other words, in this example, the measured 3D points of the object 530 are registered into a common frame of reference. In one simple configuration, a single polarization target 1950 is used with a stereo polarization camera 1960. In another simple configuration, a single polarization camera is used to measure a plurality of polarization targets. Either of these two simple configurations enables the six degree-of-freedom poses (position and orientation) of the noncontact 3D measuring device 1910 to be determined during measurement of the object 1930. Of course, it is also possible to include additional polarization cameras or additional polarization targets to further increase registration accuracy.

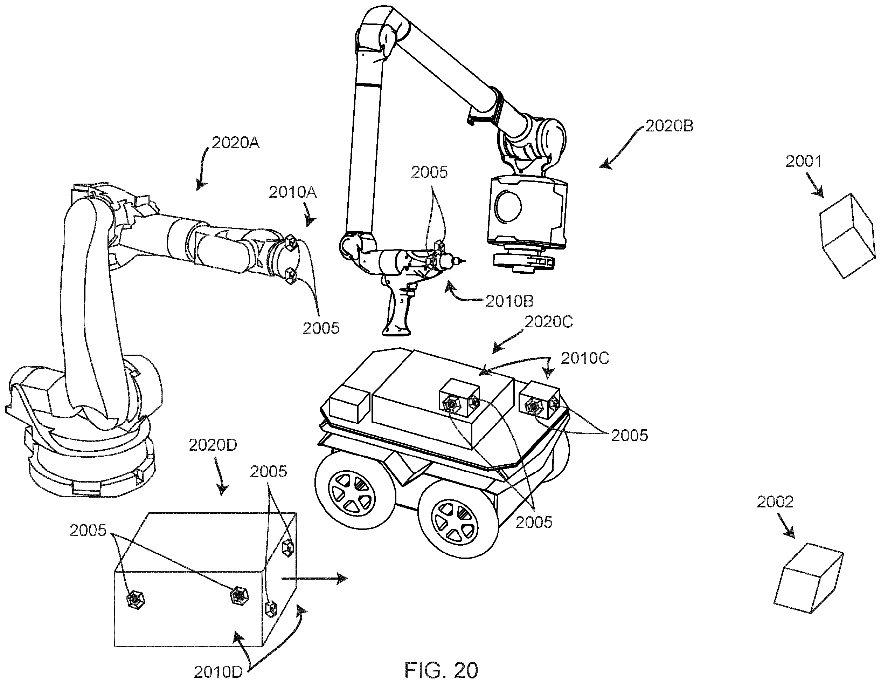

In an aspect of the present disclosure illustrated in FIG. 20, a first polarization cameras 2001 and a second polarization camera 2002 determine the pose of a moving element to which polarization targets 2005 are affixed. The term "pose" as used here means the six degrees of freedom of the moving element. As explained herein above, the six degrees of freedom may include three translational degrees of freedom (e.g., x, y, z) and three orientational degrees of freedom (e.g., roll angle, pitch angle, yaw angle). Exemplary moving elements include an end effector surface 2010A of a robot, a probing structure 2010B of an AACMM 2020B, a mounting surface 2010C of a vehicle or mobile cart 2020C, surfaces 2010D of an object 2020D that is moved with a push or a pull, or any other type of moving element. The polarization targets 2005 may be any type of polarization target having the characteristics described herein above, examples of which are given in FIGs. 15A, 15B, 15C, 15D, 15E, 15F, 15G, 15H, 16A, 16B, 16C.

Each relevant surface of a polarization targets that has a single outward-facing normal vector and is referred to as a "facet." As illustrated in FIGs. 16A, 15B, 15C, 15D, 15E, 15F, 15G, 15H, 16A, 16B, 16C, some facets may further include a pattern of marks, although this is not a requirement. In an embodiment illustrated in FIG. 20, each polarization camera 2001, 2002 records the AoP and DoP of one or more facets of the polarization targets 2005. As explained herein above in reference to FIG. 16A, with a given coordinate system, each marker facet is referenced by an index k.

As in the earlier discussions herein above, the normal vector of a facet k can be written in terms of the z-axis vector of a polarization camera and rotation matrices formed of azimuth and zenith angles of the normal vector relative to the z-axis vector. Let the azimuth angle of a normal vector of a facet k observed by the camera 2001 be $\alpha_k$ and let the zenith angle of the normal vector of the facet k be $\gamma_k$. Let the corresponding azimuth and zenith angles of the normal vector of the same facet k observed by the camera 2002 be $\beta_k$ and $\gamma'_k$, respectively. For the camera 2001, the normal vector $f_k$ of the facet k is

$$f_k = \mathbf{R}_{\mathrm{az}1,k}\, \mathbf{R}_{\mathrm{ze}1,k} \begin{pmatrix} 0 \\ 0 \\ 1 \end{pmatrix}, \qquad \text{(Eq. 4)}$$

where

$$\mathbf{R}_{\mathrm{az}1,k} = \begin{pmatrix} \cos(\alpha_k) & -\sin(\alpha_k) & 0 \\ \sin(\alpha_k) & \cos(\alpha_k) & 0 \\ 0 & 0 & 1 \end{pmatrix}, \qquad \text{(Eq. 5)}$$

$$\mathbf{R}_{\mathrm{ze}1,k} = \begin{pmatrix} \cos(\gamma_k) & 0 & \sin(\gamma_k) \\ 0 & 1 & 0 \\ -\sin(\gamma_k) & 0 & \cos(\gamma_k) \end{pmatrix}. \qquad \text{(Eq. 6)}$$

If the normal vector of the same facet k as seen by the second camera 2002 is $s_k$, then a rotation matrix $\mathbf{R}'$ exists that transforms the normal vector in the frame of reference of the camera 2001 into the normal vector in the frame of reference of the camera 2002:

$$s_k = \mathbf{R}' f_k, \qquad \text{(Eq. 7)}$$

where

$$s_k = \mathbf{R}_{\mathrm{az}2,k}\, \mathbf{R}_{\mathrm{ze}2,k} \begin{pmatrix} 0 \\ 0 \\ 1 \end{pmatrix}, \qquad \text{(Eq. 8)}$$

$$\mathbf{R}_{\text{az2},k} = \begin{pmatrix} \cos(\beta_k) & -\sin(\beta_k) & 0 \\ \sin(\beta_k) & \cos(\beta_k) & 0 \\ 0 & 0 & 1 \end{pmatrix}, \qquad\qquad \text{(Eq. 9)}$$

$$\mathbf{R}_{\text{ze2},k} = \begin{pmatrix} \cos(\gamma_k') & 0 & \sin(\gamma_k') \\ 0 & 1 & 0 \\ -\sin(\gamma_k') & 0 & \cos(\gamma_k') \end{pmatrix}. \qquad\qquad \text{(Eq. 10)}$$

For the two cameras 2001, 2002 observing the same facet $k$, the rotation matrix $R'$ describes the relative rotation between the cameras 2001, 2002. With a pair of images from the cameras 2001, 2002 obtained for a common set of at least three of the facets, the relative rotation matrix $R'$ can be determined. In Eq. (1) through Eq. (10), the values $\alpha_k$ and $\beta_k$ are known relatively accurately based on AoP measurements, carried out by one or processors in accordance with the procedure described herein above in reference to FIG. 14. The values $\gamma_k$ and $\gamma_k'$ are not determined with the same level of consistency, however, and so the expressions involving those quantities in the equations above are left as unknowns. In the equations above, the quantity $\mathbf{R'}$ has three components and hence represents three unknowns. Eq. (6) and Eq. (10) each have one unknown for each measured facet. Hence the number of unknowns is $3 + 2N$, where $N$ is the number of facets. The number of independent equations in Eq. (7) is $3N$. If three facets $k$ are measured, the number of unknowns is $3 + 2(3) = 9$, which equals the number of independent equations $3(3) = 9$. Hence, measurements are needed of at least three facets by the two cameras 2001, 2002. In a further embodiment, the polarization cameras 2001, 2002 measure more than three facets, resulting in the determining of additional equations. In an embodiment, one or more processors uses these equations to solve for the orientation of the polarization target facets relative to the cameras 2001, 2002. In an embodiment, an optimization method such as the least squares method is used to determine the best values for the orientation angles. In an embodiment, the method described herein above with reference to FIG. 16C is used to select the outward facing normal vector for each facet, as desired.

Besides obtaining the orientation of moving elements, a user may also desire to know the three positional degrees of freedom of a moving element such as 2010A, 2010B, 2010C, 2010D. These are determined using triangulation based on the images obtained by the two cameras 2001, 2002. In an embodiment, the relative position and orientation of the cameras 2001, 2002 are known at the start of a measurement. In an embodiment, a processor uses the baseline distance between the perspective centers of the polarization cameras 2001, 2002 to perform a triangulation calculation. In most cases, the triangulation calculation further uses information about the focal lengths of the two polarization cameras and the relative directions of the optical axes of the cameras 2001, 2002. In carrying out a triangulation calculation, some collection of image points are matched in the images obtained by the polarization cameras 2001, 2002. As explained herein above in reference to FIGs. 15G, 15H, the matching image points may be obtained in a variety of ways. One approach is to use fiducial markers such as those illustrated in FIGs. 15A, 15B, 15C, 15D, 15E, 15F, 15G, 16A, 16B, 16C. In a 2D image, marks in a fiducial marker may be used both to identify and locate facets in the fiducial marker. Another approach is to locate facets based on asymmetries in the shapes of the polarization targets. Yet another approach is to locate facets based on the intersection of lines of the polarization target (e.g., lines intersecting at an apex point 1510 as shown in FIG. 15H).

When an object having polarization markers 2005 is tracked with polarization cameras, the tracking is typically done at a relatively high frame rate. In this case, the time between successive frames is small, which results in the image content changing little from frame to frame. In such a situation, the rotation between frames is likely to be small, which may eliminate the need to perform the orientation calculations in each frame.

In some embodiments, the triangulation calculations are further enhanced by placing one or more reference lengths within the images obtained by the cameras 2001, 2002. Such reference lengths assist in correctly determining the scale of the polarization targets observed by the cameras 2001, 2002. The reference lengths may be physical artifacts having two physical marks separated by a known length. Alternatively, the reference length may be two physical marks not included as part of artifact but instead simply located on the object and determined using a length measuring instrument.

Initially, the relative positions and orientations of the polarization cameras 2001, 2002 may not be known. By allowing the polarization targets 2005 to be moved to different positions by the moving elements (e.g., 2010A, 2010B, 2010C, 2010D) in FIG. 20, the images collected by the cameras may be used to determine the position and orientation of the moving elements over time. Note that in Eq. 7 the rotation matrix $\mathbf{R'}$ does not change as the elements are moved. In an embodiment, the additional collected image information from the multiple images is used in solving with the processor for the relative position and orientation of the polarization cameras 2001, 2002.

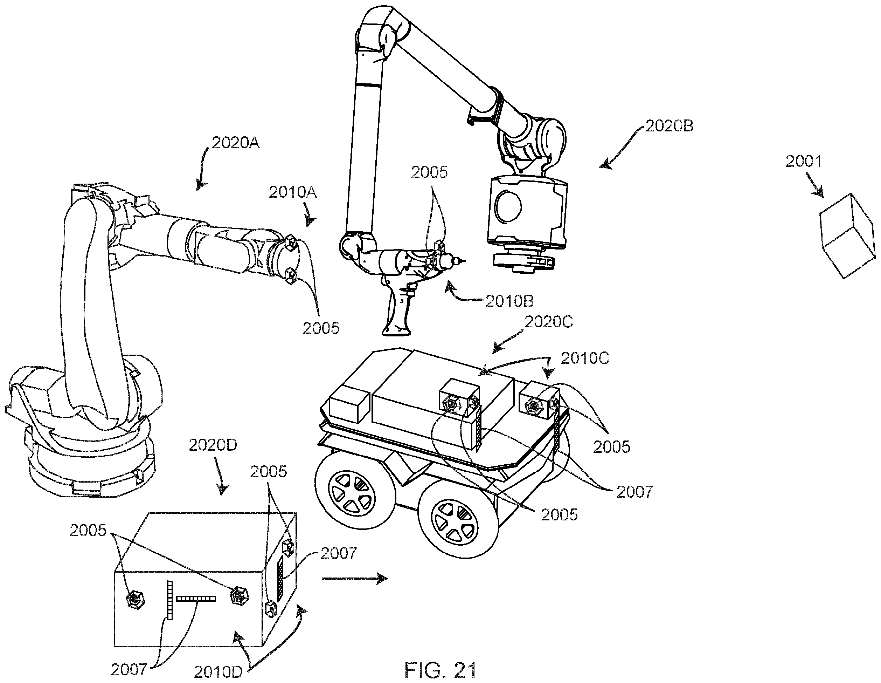

FIG. 21 is like FIG. 20 except that a single polarization camera 2001 is used to track and locate the moving elements and, in addition, one or more reference lengths have been added to the moving element or placed near to the moving element. In exemplary cases of the end effector surfaces 2010A, 2010B, each reference length is a distance between designated marker points on two of the polarization targets 2005. In the exemplary cases of the end effector surfaces 2010C, 2010D, the reference length is a length between marks on a reference length artifact 2007. In an embodiment, triangulation is again used to determine the relative position and orientation of the moving elements, but in this case the polarization camera 2001 captures images from multiple facets of one or more polarization targets 2005 with the measurements made with the polarization targets 2005 in different positions relative to the polarization camera 2001. For example, the vehicle or mobile cart 2020C may be moved to a second pose relative to the pose shown in FIG. 21. At the new pose, the polarization camera 2001 views the facets at a different angle than in the first pose. If enough facets are recorded in the captured images and if the separation between the mobile cart in the first pose and second pose is large enough, with the scale 2007 clearly in view in the images, a processor can determine the change in pose of the mobile cart relative to the polarization camera 2001. More accuracy may be obtained by increasing the number of poses captured by the camera 2001. This same method of measurement likewise applies to the moving robot end effector surface 2010A, the moving AACMM probing structure 2010B, and the moving mounting surface 2010C.

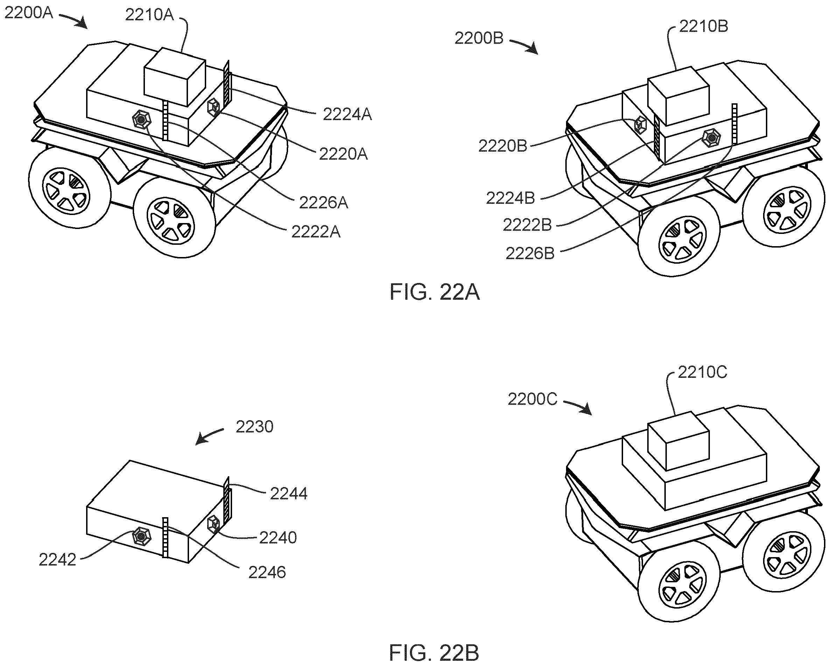

FIG. 22A is an illustration showing vehicles or carts 2200A, 2200B having polarization cameras 2210A, 2210B, respectively. In an embodiment, the polarization cart 2200A further includes polarization targets 2220A, 2222A and scales 2224A, 2226A, while the polarization cart 2200B further includes polarization targets 2220B, 2222B and scales 2224B, 2226B. In an embodiment, the cart 2200A tracks the relative position and orientation of the cart 2200B, following one or more polarization targets 2220B, 2222B, while further recording one or more scales 2224B, 2226B. At the same time, the cart 2200B tracks the relative position and orientation of the cart 2200A, following one or more polarization targets 2220A, 2222B, while further recording one or more scales 2224A, 2226A. In an embodiment, the carts 2200A, 2200B are autonomously driven devices that avoid collision by the monitoring of their relative positions and orientations.

FIG. 22B is an illustration showing a vehicle or cart 2200C having a polarization camera 2210C. It also shows a stationary object 2230 having exemplary polarization targets 2240, 2242 and exemplary scales 2244, 2246. In an embodiment, the polarization cart 2210C tracks the relative position and orientation of the object 2230 by measuring with the polarization camera 2210C one or more of the scales 2244, 2246 and one or more of the polarization targets 2240, 2242. The method of FIG. 22B is much like the method of FIG. 21 except that in FIG. 21 the polarization camera is made to move on the cart while the polarization targets are held stationary.

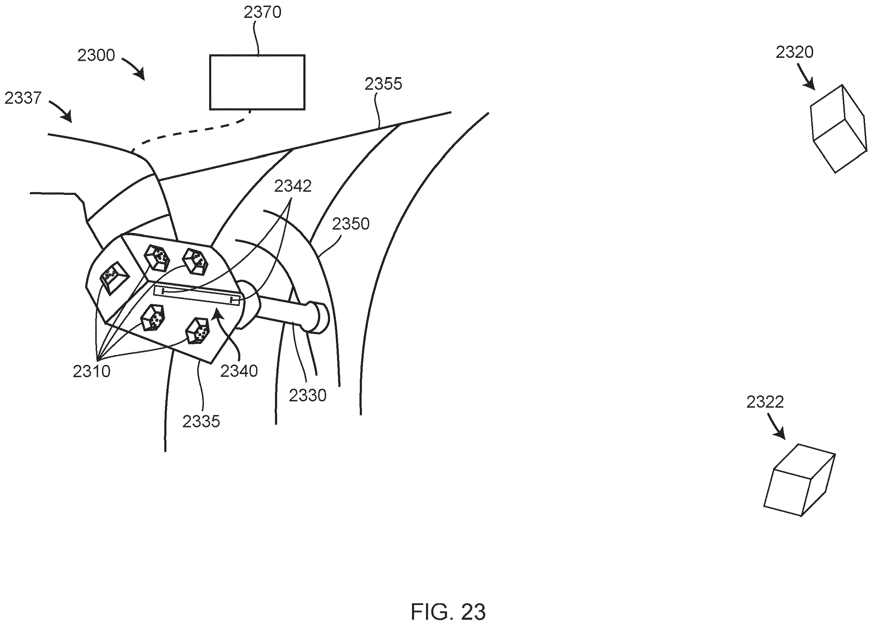

FIG. 23 is a schematic representation of a machining application 2300 in which polarization targets 2310 are used in combination with one or more polarization cameras 2320, 2322 to guide a machining operation. In the figure, a machining tool, such as a milling tool or an end mill 2330 for example, is mounted on an end-effector motor 2335, which is attached to the robot articulated arm element 2337. In an embodiment, the polarization targets 2310 are mounted on the end-effector motor. In an embodiment, a reference scale 2340 includes two or more marks 2342, the distance between which is a reference distance. In an embodiment, the reference scale is placed on the effector motor. In other embodiments, the scale is near to, but not on, the end-effector motor 2335. In the example shown in FIG. 23, the end mill tool 2330 machines or cuts a groove 2350 into a curved surface 2355. In an embodiment, the tool 2330 may be used to cut metal, wood, or plastic material.

In an embodiment, the robot has been calibrated to have robot compensation parameters, also referred to as robot control parameters. The robot control parameters indicate the input signals, which might be analog or digital signals, required to move the robot end effector from a first position and orientation to a desired second position and orientation. Such robot control parameters may have been obtained, for example, by performing a compensation procedure prior to machining or other final use of the robot. In an embodiment, the polarization camera 2320 (or polarization cameras 2320, 2322) monitor the position and orientation of the robot end effector and provides a processing system 2370 with information to correct the position and orientation of the end effector in real time. The processing system 2370 may further process data from the cameras 2320, 2322, or separate processors may be provided for the cameras 2320, 2322.

In a related embodiment, a polarization camera is used to record the position and orientation of a polarization target attached to a robot end effect in response to robot control signals. The resulting map of end effector positions and orientations as a function of robot control signals is sometimes called a calibration map. In an embodiment, the differences between the observed movement and the movement as predicted by calibration map may be reported to the operator.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not limited by the foregoing description but is only limited by the scope of the appended claims.

**Claims**

1. A method comprising:

with a first polarization camera, capturing a first image of a first polarization target and recording polarization of light that formed the first image, the first polarization target placed on a moving object; with a processing system, determining a first orientation and a first position of the first polarization target based at least in part on the captured first image and the recorded polarization of the light that formed the first image; and storing the first orientation and the first position.

2. The method of claim 1, further comprising:

with the first polarization camera, further capturing a second polarization target in the first image; and with the processing system, determining a second position of the second polarization target based at least in part on the captured first image and the recorded polarization of the light that formed the first image.

3. The method of claim 1, wherein the moving object is a robot end effector coupled to a robot.

4. The method of claim 1, further comprising:

moving the first polarization target; with the first polarization camera, capturing a second image of the first polarization target and recording polarization of light that formed the second image; and with the processing system, determining a second orientation and a second position of the first polarization target based at least in part on the captured second image and the recorded polarization of light that formed the second image.

5. A method of claim 3, further comprising:

moving the first polarization target in response to first control signals sent to the robot; with the first polarization camera, capturing a second image of the first polarization target and recording polarization of light that formed the second image; with the processing system, determining a second orientation and a second position of the first polarization target based at least in part on the captured second image and the recorded polarization of the light that formed the second image; and with the processing system, recording first movement of the first polarization target in response to the first control signals, the first movement being from the first position and the first orientation to the second position and the second orientation.

6. The method of claim 5, further comprising:
sending second control signals to the robot, the second control signals based at least in part on a desired third position of the first polarization target and on the recorded first movement of the first polarization target.

7. The method of claim 5, further comprising:

further moving the first polarization target in response to a plurality of additional control signals following the first control signals; with the first polarization camera, capturing a plurality of additional images following the second image and recording polarization of light that formed the plurality of additional images; with the processing system, determining an orientation and a position for each of the plurality of additional images; with the processing system, determining a calibration map for the robot end effector, the calibration map indicating a movement of the robot end effector in response to a control signal; and storing the calibration map.

8. The method of claim 7, further comprising directing movement of the robot end effector further based at least in part on the calibration map.

9. The method of claim 8, further comprising monitoring observed movement of the first polarization target and reporting differences between the observed movement and the movement as predicted by the calibration map.

10. The method of claim 3, wherein the robot end effector holds a machining tool, the machining tool being a milling tool used to remove portions of a metal, wood, or plastic material.

11. The method of claim 1, further comprising:

with a second polarization camera, capturing a second image of the first polarization target and recording polarization of light that formed the second image; and

with the processing system, determining the first orientation and the first position of the first polarization target further based on the captured second image and the recorded polarization of the light that formed the second image, and is further based on a relative transformation between the first polarization camera and the second polarization camera.

12. The method of claim 1, further wherein the moving object is a cart or vehicle.

13. A method comprising:

with a first polarization camera, capturing a first image of a first polarization target and recording polarization of light that formed the first image, the first polarization camera being placed on a moving object;

with a processing system, determining a first orientation and a first position of the first polarization camera based at least in part on the captured first image and the recorded polarization of the light that formed the first image; and

storing the first orientation and the first position.

14. The method of claim 13, wherein the first polarization target is stationary.

15. The method of claim 13, wherein the first polarization target is placed on a moving object and wherein the first orientation and the first position of the of the first polarization target are determined in relation to the moving first polarization camera.

FIG. 1

FIG. 2

EP 3 719 441 A1

EP 3 719 441 A1

FIG. 3

FIG. 4

FIG. 5A

FIG. 5B

FIG. 6A

FIG. 6B

FIG. 6C

FIG. 6D

797

798 →

795

796

FIG. 7A

797

799A

FIG. 7B

799B

796

FIG. 7C

890

891

894A

893A

893B

894B

892

893C

894C

FIG. 8

FIG. 9A

FIG. 9B

FIG. 9C

FIG. 10A   FIG. 10B   FIG. 10C   FIG. 10D   FIG. 10E

FIG. 11A

FIG. 11B

FIG. 11C

FIG. 12A

FIG. 12B

FIG. 12C

FIG. 12D

1256

1257

1258

1259

FIG. 12E

FIG. 13A

FIG. 13B

FIG. 14

FIG. 15C

1502C

1500C

FIG. 15F

1502F

1500F

FIG. 15B

1502B

1504B

1500B

FIG. 15E

1502E

1500E

FIG. 15A

1502A

1504A

1500A

FIG. 15D

1502D

1500D

1500G

1502G

1510

FIG. 15G

1500H

1510

FIG. 15H

FIG. 16A

FIG. 16B

FIG. 16C

FIG. 17A

FIG. 17B

1800

FIRST INSTANCE

| Measure first 3D coordinates of an object with a noncontact 3D measuring device | 1802 |

| With a polarization camera, capture an image of a polarization target and record a polarization of light that formed the image | 1804 |

SECOND INSTANCE

| Measure second 3D coordinates of an object with the noncontact 3D measuring device | 1806 |

| With the polarization camera, capture an image of the polarization target and record the polarization of light that formed the image | 1808 |

| With the processor, determine an orientation of the polarization target based at least in part on the captured image in the first instance, the captured image in the second instance, the recorded polarization in the first instance, and the recorded polarization in the second instance | 1810 |

| With the processor, register the first 3D coordinates and the second 3D coordinates in a common coordinate system to obtain registered 3D coordinates, the registering based at least in part on the first 3D coordinates, the second 3D coordinates, and the orientation of the polarization target | 1812 |

| Store the registered 3D coordinates | 1814 |

FIG. 18

FIG. 19

FIG. 20

FIG. 21

FIG. 22A

FIG. 22B

FIG. 23

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/224270 A1 (WOLKE MATTHIAS [DE] ET AL) 9 August 2018 (2018-08-09) | 1,2,4, 12-15 | INV. G01B11/00 |
| Y | * paragraph [0091]; figures 1, 7C * * paragraph [0135] - paragraph [0145]; figures 32-38 * * paragraph [0166] - paragraph [0167] * ----- | 12 | G01B11/24 G01S7/499 G02B5/30 G02B27/28 G02B30/25 |
| X | EP 3 156 761 A1 (H4 TECH LTD [GB]) 19 April 2017 (2017-04-19) | 1-6,11, 13 | G03B35/26 H04N13/204 |
| Y | * paragraph [0006] - paragraph [0048]; figures 1, 2 * ----- | 3,5,6,11 | H04N13/254 B23Q17/24 G06T7/70 |
| X | US 2018/018778 A1 (HAVERKAMP NILS [DE] ET AL) 18 January 2018 (2018-01-18) | 1-11, 13-15 | B25J9/16 B25J19/02 |
| Y | * paragraph [0062] - paragraph [0064] * * paragraph [0097] * * paragraph [0137] - paragraph [0177]; figures 1-4 * * paragraph [0210] - paragraph [0214] * ----- | 3,5,6,11 | |
| Y | US 2016/291160 A1 (ZWEIGLE OLIVER [DE] ET AL) 6 October 2016 (2016-10-06) * paragraph [0157]; figures 20, 22 * ----- | 12 | |

| | |
|---|---|
| TECHNICAL FIELDS SEARCHED (IPC) | G01B G01S H04N G03D G02B G03B B23Q G06T B25J |

The present search report has been drawn up for all claims

| Place of search | Date of completion of the search | Examiner |
|---|---|---|
| Munich | 26 August 2020 | Braun, P |

EPO FORM 1503 03.82 (P04C01)

## ANNEX TO THE EUROPEAN SEARCH REPORT
## ON EUROPEAN PATENT APPLICATION NO.

EP 20 16 4438

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2020

| Patent document cited in search report | | Publication date | Patent family member(s) | | Publication date |
|---|---|---|---|---|---|
| US 2018224270 | A1 | 09-08-2018 | US | 2018224270 A1 | 09-08-2018 |
| | | | WO | 2018148046 A1 | 16-08-2018 |
| EP 3156761 | A1 | 19-04-2017 | NONE | | |
| US 2018018778 | A1 | 18-01-2018 | CN | 107430772 A | 01-12-2017 |
| | | | DE | 102015205738 A1 | 06-10-2016 |
| | | | EP | 3278302 A1 | 07-02-2018 |
| | | | US | 2018018778 A1 | 18-01-2018 |
| | | | WO | 2016156406 A1 | 06-10-2016 |
| US 2016291160 | A1 | 06-10-2016 | DE | 102016105858 A1 | 06-10-2016 |
| | | | US | 2016291160 A1 | 06-10-2016 |
| | | | US | 2019137627 A1 | 09-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 16376521 B
- US 6711293 B